# EUROPEAN PATENT SPECIFICATION

(11) **EP 3 456 577 B1**
(45) Date of publication and mention of the grant of the patent: **26.01.2022**
(21) Application number: 18193971.1
(22) Date of filing: 12.09.2018
(51) Int. Cl.: B60K 37/06

(54) **USER INTERFACE APPARATUS FOR VEHICLE**
BENUTZERSCHNITTSTELLENVORRICHTUNG FÜR FAHRZEUG
INTERFACE UTILISATEUR POUR VÉHICULE

(30) Priority: 13.09.2017 KR 20170117383; 31.01.2018 KR 20180012366
(43) Date of publication of application: 20.03.2019
(73) Proprietor: LG Electronics Inc., Yeongdeungpo-gu Seoul 07336 (KR)
(72) Inventor: LEE, Jeongjun, 06772 Seoul (KR); LEE, Seehyung, 06772 Seoul (KR); OH, Kyungtae, 06772 Seoul (KR)
(74) Representative: Vossius & Partner Patentanwälte Rechtsanwälte mbB

(56) References cited:
- WO-A1-2017/010601
- US-A1- 2015 227 221
- US-B2- 9 589 392

## Description

The present invention relates to a user interface apparatus for a vehicle.

A vehicle is an apparatus that can transport a user riding therein. For example, a vehicle may include an automobile.

In some examples, a vehicle may include a variety of sensors and electronic devices for the convenience of a user who uses the vehicle. For example, a vehicle may include an Advanced Driver Assistance System (ADAS) for user driving convenience. Recently, autonomous vehicles are of interest.

In some examples, a vehicle may include a user interface apparatus for communication with a user. In some cases, the user interface apparatus may be implemented such that a function of receiving an input from a user and a function of providing information generated by the vehicle to the user are performed by one device. In some cases, the reception function and the provision function may be performed separately by a plurality of devices.

In some examples, the user interface apparatus may include an input unit for sensing a user's input. In some cases, the user interface apparatus may include multiple display units. Each display unit may display a different content. To manipulate each display unit, a different input device may be provided. In some examples where only one input device is used, manipulation of the multiple display units may be complicated.

In some cases, when a driver attempts to manipulate a content displayed on each display during driving, the driver may be distracted, which may reduce driving safety.

It is of interest to develop a user interface apparatus that allows a driver to manipulate multiple displays safely and conveniently.

US 2015/227221 (A1) relates to a mobile terminal device that is provided with a touch panel and a control device which causes the touch panel to function as a touch pad for operating an operation object displayed on an on-vehicle display when the mobile terminal device is placed at a predetermined position in a vehicle interior.

WO 2017/010601 (A1) relates to a vehicle control device capable of displaying various image information related to a state of a vehicle and a method for controlling the same.

US 9 589 392 (B2) relates to a method and a system for providing a user interface in a vehicle, in which a wireless data link is set up between the vehicle and a mobile reproduction appliance that is detachably connected in the vehicle or that is freely held by a user in the vehicle.

One object of the present invention is to allow a user to safely manipulate a user interface apparatus having a plurality of displays.

Another object of the present invention is to provide a user interface apparatus which allows a user to conveniently change a control target from among a plurality of displays.

The present invention is defined by the subject-matter of the present claim 1.

In some implementations, the user interface apparatus further may include a user gaze sensing unit, where the one or more processors are further configured to, in response to the user gaze sensing unit detecting a user's gaze at the second display, control the second display based on the user input received through the first display. In some examples, the one or more processors may be further configured to, in response to reception of user input for switching the control mode, switch the control mode from the first mode to the second mode or from the second mode to the first mode.

In some implementations, the one or more processors may be further configured to determine the control mode based on at least one of driving information of the vehicle or image information displayed on the second display. In some examples, the one or more processors may be further configured to, based on a speed of the vehicle being greater than or equal to a preset value, determine that the control mode is the second mode. In some examples, the one or more processors may be further configured to, based on a detection of user input at the first display while the second display displays information requiring user input, determine that the control mode is the second mode.

In some implementations, the one or more processors may be further configured to: identify a first user input and a second user input based on the user input received from the input unit; determine that the control mode is the first mode based on a detection of the first user input at the first display; and determine that the control mode is the second mode based on a detection of the second user input at the first display.

In some implementations, the one or more processors may be further configured to, based on a detection of the user input through the first display in the first mode, control the second display to display an image corresponding to at least a part of an image that is displayed on the first display. In some examples, the one or more processors may be further configured to, while the vehicle is traveling, control the second display to display the image corresponding to at least the part of the image that is displayed on the first display. In some examples, the one or more processors may be further configured to, based on the second display displaying at least the part of the image that is displayed on the first display, control the first display to reduce brightness of the image displayed on the first display or to stop displaying the image on the first display.

In some examples, the one or more processors may be further configured to control the second display to display an image corresponding to a portion of the image that is displayed on the first display, the portion of the image being associated with the user input received through the first display.

In some implementations, the one or more processors may be further configured to control the second display to display a graphic object corresponding to the user input received through the first display. In some examples, the one or more processors may be further configured to: detect a movement input at the first display corresponding to a gesture of a user from a first point of the first display to a second point of the first display; and based on detection of the movement input at the first display, control the second display to display a graphic object that is moving from a first point of the second display to a second point of the second display.

In some implementations, the one or more processors may be further configured to: detect a movement input at the first display corresponding to a gesture of a user from a first point of the first display to a second point of the first display; and based on detection of the movement input at the first display, control the second display to change a displayed location of a graphic object from a first point of the second display to a second point of the second display.

In some implementations, the one or more processors may be further configured to: identify a third user input and a fourth user input based on the user input received from the input unit, the third user input being different from the fourth user input; based on detection of the third user input at the first display, control the second display to display a graphic object corresponding to an object located within a predetermined distance from the vehicle; and based on detection the fourth user input at the first display, control the second display to display a graphic object corresponding to an object located outside of the predetermined distance from the vehicle.

The details of other implementations are included in the following description and the accompanying drawings.

The implementations of the present invention have one or more of the following effects.

First, by allowing a user to selectively control a first display or a second display in the same manner, the user is able to manipulate the user interface apparatus conveniently.

Second, by providing a user interface apparatus which a user is able to manipulate conveniently, a driver is able to manipulate the user interface apparatus during driving.

Effects of the present invention should not be limited to the aforementioned effects and other unmentioned effects will be clearly understood by those skilled in the art from the claims.

The implementations will be described in detail with reference to the following drawings in which like reference numerals refer to like elements.
FIG. 1 is a view illustrating an example external appearance of an example vehicle.
FIG. 2 are different angled views of the external appearance of the vehicle.
FIGS. 3 and 4 are views illustrating an example interior configuration of an example vehicle.
FIGS. 5 and 6 are views for explanation of example objects around an example vehicle.
FIG. 7 is a block diagram illustrating an example vehicle.
FIG. 8 is a block diagram illustrating an example user interface apparatus.
FIGS. 9A and 9B are example control flowcharts of an example user interface apparatus.
FIGS. 10A, 10B, and 10C are diagrams illustrating example user interface apparatus.
FIGS. 11A and 11B are diagrams illustrating example user interface apparatus.
FIGS. 12A and 12B are diagrams illustrating example user interface apparatus.
FIGS. 13A and 13B are diagrams illustrating example user interface apparatus.
FIGS. 14A and 14B are diagrams illustrating example user interface apparatus.
FIGS. 15A and 15B are diagrams illustrating example user interface apparatus.
FIGS. 16A and 16B are diagrams illustrating example user interface apparatus.
FIGS. 17A and 17B are diagrams illustrating example user interface apparatus.
FIGS. 18 and 19 are diagrams illustrating example user interface apparatus.
FIG. 20 is a diagram illustrating another example user interface apparatus.

A vehicle as described in this specification may include, but be not limited to, an automobile, a motorcycle, or the like. Hereinafter, a description will be given based on an automobile.

A vehicle as described in this specification may include one or more of an internal combustion engine vehicle including an engine as a power source, a hybrid vehicle including both an engine and an electric motor as a power source, or an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

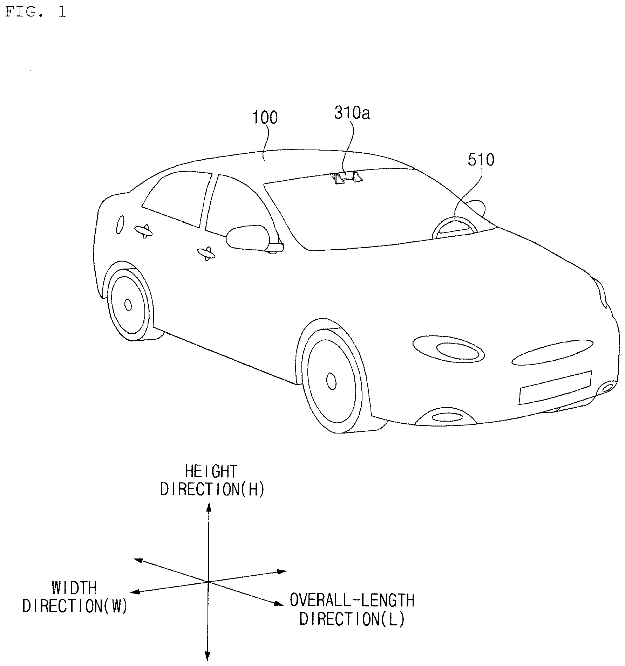

FIG. 1 is a view of an example external appearance of an example vehicle.

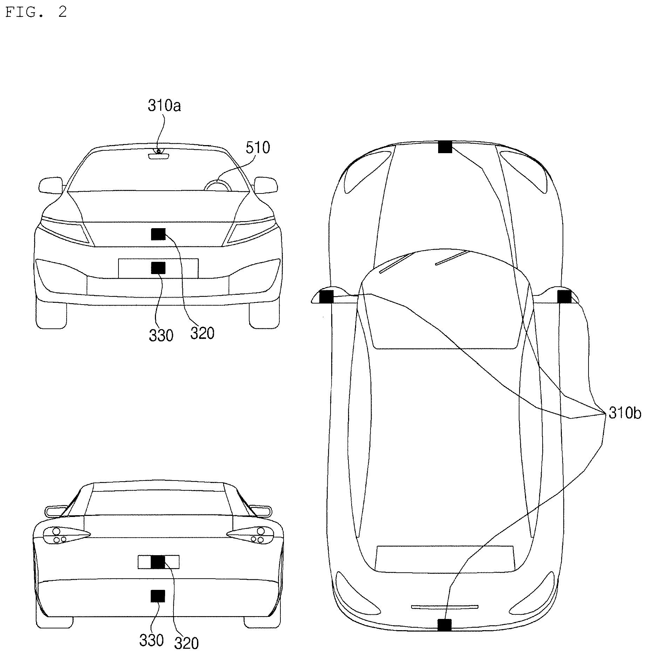

FIG. 2 is different angled views of an example vehicle.

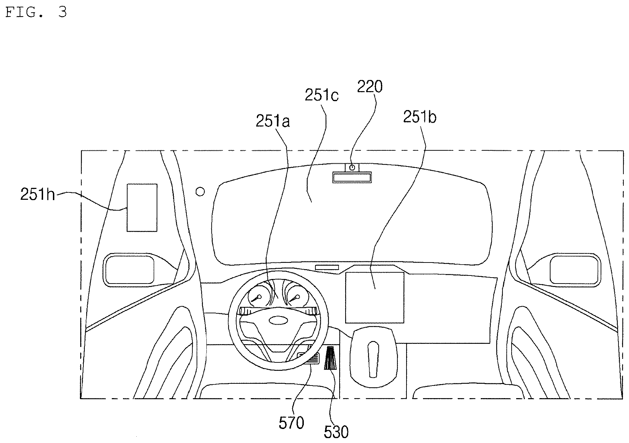

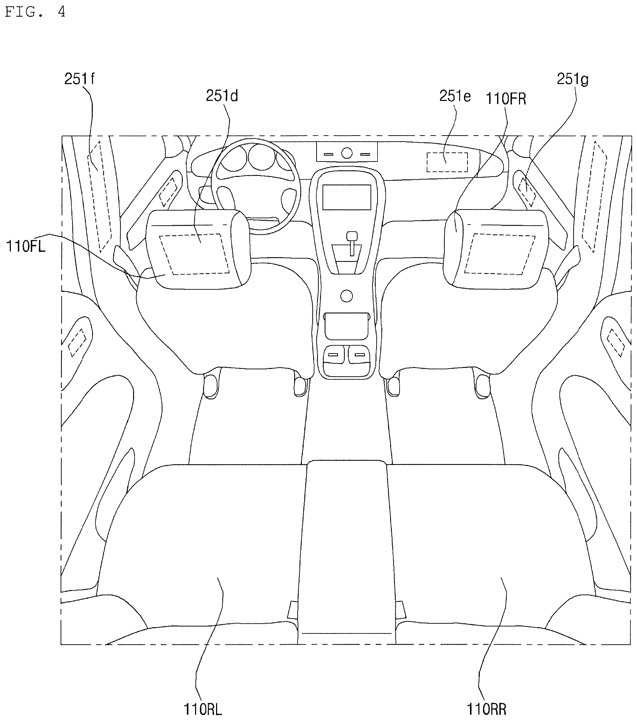

FIGS. 3 and 4 are views of an example internal configuration of an example vehicle.

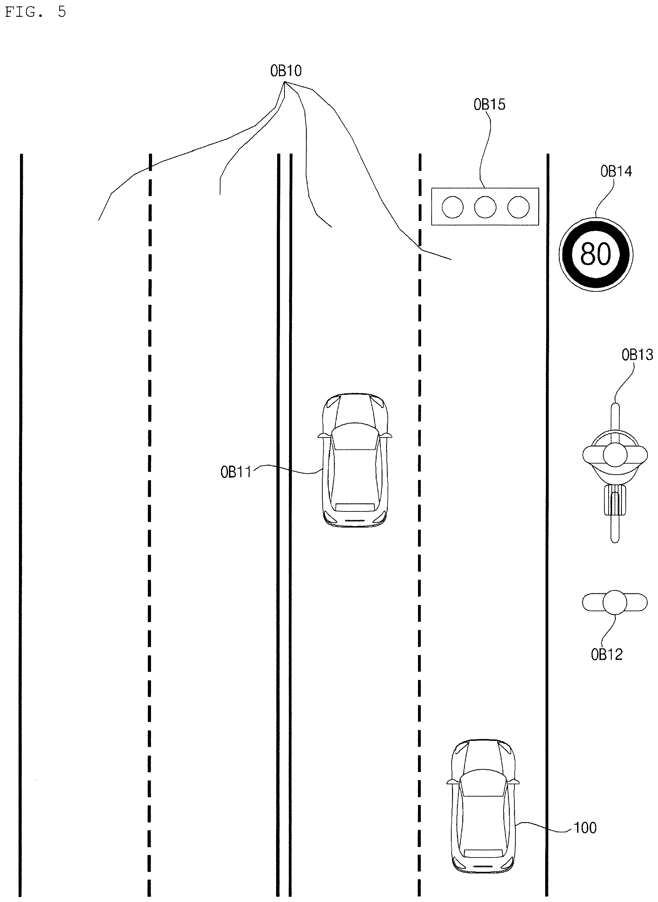

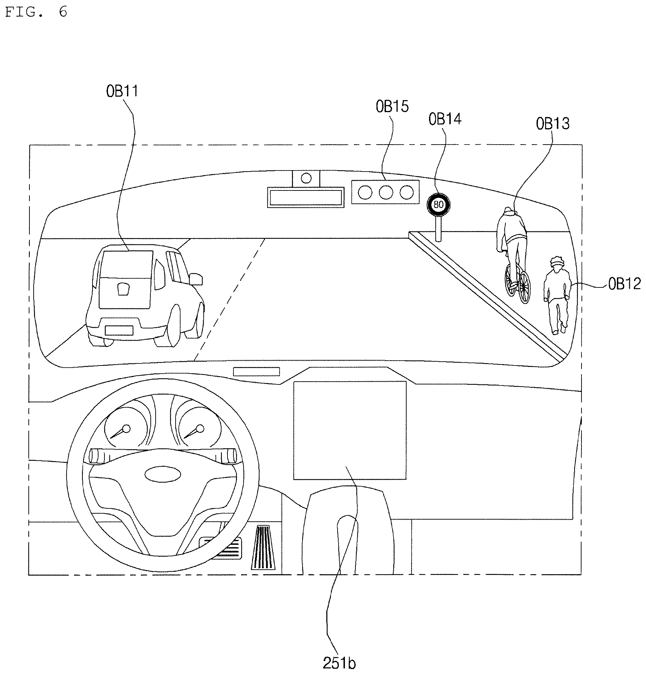

FIGS. 5 and 6 are views for explanation of example objects around an example vehicle.

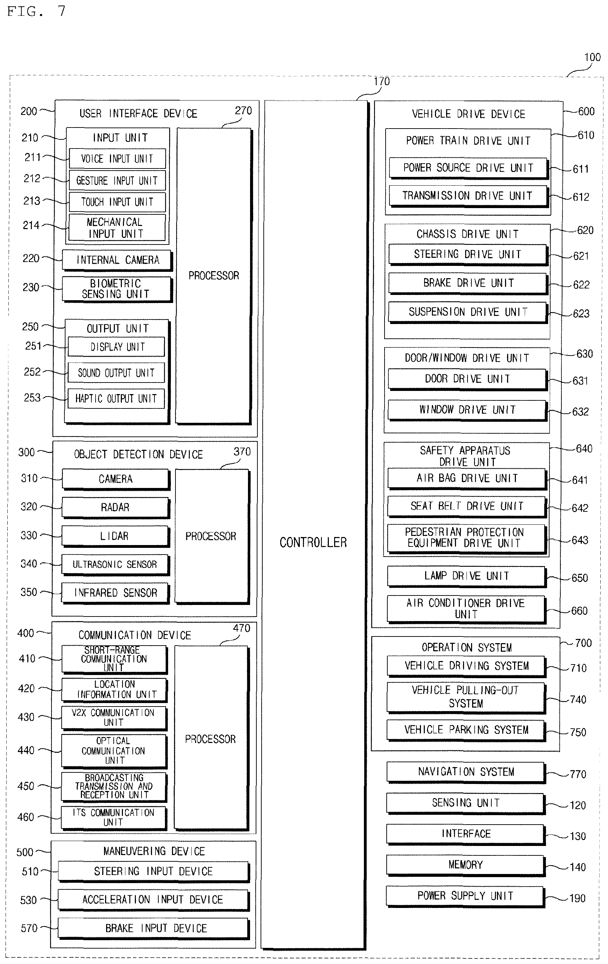

FIG. 7 is a block diagram illustrating an example vehicle.

Referring to FIGS. 1 to 7, a vehicle 100 may include a plurality of wheels, which are rotated by a power source, and a steering input unit 510 for controlling a driving direction of the vehicle 100.

The vehicle 100 may be an autonomous vehicle.

The vehicle 100 may switch to an autonomous driving mode or a manual mode in response to a user input.

For example, in response to a user input received through a user interface apparatus 200, the vehicle 100 may switch from a manual mode to an autonomous driving mode, or vice versa.

The vehicle 100 may switch to the autonomous driving mode or to the manual mode based on driving situation information.

The driving situation information may include at least one of the following: information on an object located outside the vehicle 100, navigation information, and vehicle state information.

For example, the vehicle 100 may switch from the manual mode to the autonomous driving mode, or vice versa, based on driving situation information generated by the object detection apparatus 300.

For example, the vehicle 100 may switch from the manual mode to the autonomous driving mode, or vice versa, based on driving situation information received through a communication apparatus 400.

The vehicle 100 may switch from the manual mode to the autonomous driving mode, or vice versa, based on information, data, and a signal provided from an external device.

When the vehicle 100 operates in the autonomous driving mode, the autonomous vehicle 100 may operate based on a vehicle travel system 700.

For example, the autonomous vehicle 100 may operate based on information, data, or signals generated by a driving system 710, a parking-out system 740, and a parking system 750.

While operating in the manual mode, the autonomous vehicle 100 may receive a user input for driving of the vehicle 100 through a driving manipulation apparatus 500. In response to the user input received through the driving manipulation apparatus 500, the vehicle 100 may operate.

The term "overall length" is the length from the front end to the rear end of the vehicle 100, the term "overall width" is the width of the vehicle 100, and the term "overall height" is the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

As illustrated in FIG. 7, the vehicle 100 may include the user interface apparatus 200, the object detection apparatus 300, the communication apparatus 400, the driving manipulation apparatus 500, a vehicle drive apparatus 600, the vehicle travel system 700, a navigation system 770, a sensing unit 120, an interface 130, a memory 140, a controller 170, and a power supply unit 190.

In some implementations, the vehicle 100 may further include other components in addition to the aforementioned components, or may not include some of the aforementioned components.

The user interface apparatus 200 is provided to support communication between the vehicle 100 and a user. The user interface apparatus 200 may receive a user input, and provide information generated in the vehicle 100 to the user. The vehicle 100 may enable User Interfaces (UI) or User Experience (UX) through the user interface apparatus 200.

The user interface apparatus 200 may include an input unit 210, an internal camera 220, a biometric sensing unit 230, an output unit 250, and a processor 270.

In some implementations, the user interface apparatus 200 may further include other components in addition to the aforementioned components, or may not include some of the aforementioned components.

The input unit 210 is configured to receive information from a user, and data collected in the input unit 210 may be analyzed by the processor 270 and then processed into a control command of the user.

The input unit 210 may be disposed inside the vehicle 100. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may switch a gesture input of a user into an electrical signal. The switched electrical signal may be provided to the processor 270 or the controller 170.

The gesture input unit 212 may include at least one selected from among an infrared sensor and an image sensor for sensing a gesture input of a user.

In some implementations, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense a 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170.

The touch input unit 213 may include a touch sensor for sensing a touch input of a user.

In some implementations, the touch input unit 210 may be formed integral with a display unit 251 to implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the processor 270 or the controller 170.

The mechanical input unit 214 may be located on a steering wheel, a center fascia, a center console, a cockpit module, a door, etc.

The internal camera 220 may acquire images of the inside of the vehicle 100. The processor 270 may sense a user's condition based on the images of the inside of the vehicle 100. The processor 270 may acquire information on an eye gaze of the user. The processor 270 may sense a gesture of the user from the images of the inside of the vehicle 100.

The biometric sensing unit 230 may acquire biometric information of the user. The biometric sensing unit 230 may include a sensor for acquire biometric information of the user, and may utilize the sensor to acquire finger print information, heart rate information, etc. of the user. The biometric information may be used for user authentication.

The output unit 250 is configured to generate a visual, audio, or tactile output.

The output unit 250 may include at least one selected from among a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

In some implementations, the user interface apparatus 200 may include a plurality of displays units located at a plurality of regions 251a to 251g.

For example, the display unit 251 may be disposed in a region of a steering wheel, a region 251a, 251b, or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface apparatus 200.

In some implementations, the user interface apparatus 200 may include a plurality of processors 270 or may not include the processor 270.

In the case where the user interface apparatus 200 does not include the processor 270, the user interface apparatus 200 may operate under control of the controller 170 or a processor of a different device inside the vehicle 100.

In addition, the user interface apparatus 200 may be referred to as a display device for vehicle.

The user interface apparatus 200 may operate under control of the controller 170.

The object detection apparatus 300 is configured to detect an object outside the vehicle 100. The object detection apparatus 300 may generate information on the object based on sensing data.

The information on the object may include information about the presence of the object, location information of the object, information on a distance between the vehicle 100 and the object, and information on a speed of movement of the vehicle 100 relative to the object.

The object may include various objects related to travelling of the vehicle 100.

Referring to FIGS. 5 and 6, an object o may include a lane OB10, a nearby vehicle OB11, a pedestrian OB12, a two-wheeled vehicle OB13, a traffic signal OB14 and OB15, a light, a road, a structure, a bump, a geographical feature, an animal, etc.

The lane OB10 may be a lane in which the vehicle 100 is traveling, a lane next to the lane in which the vehicle 100 is traveling, or a lane in which a different vehicle is travelling in the opposite direction. The lane OB10 may include left and right lines that define the lane. The lane may be a concept including an intersection.

The nearby vehicle OB11 may be a vehicle that is travelling in the vicinity of the vehicle 100. The nearby vehicle OB11 may be a vehicle within a predetermined distance from the vehicle 100. For example, the nearby vehicle OB11 may be a vehicle that is preceding or following the vehicle 100.

The pedestrian OB12 may be a person located in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle located in the vicinity of the vehicle 100 and moves with two wheels. The two-wheeled vehicle OB13 may be a vehicle that has two wheels within a predetermined distance from the vehicle 100. For example, the two-wheeled vehicle OB13 may be a motorcycle or a bike on a sidewalk or the roadway.

The traffic signal may include a traffic light OB15, a traffic sign plate OB14, and a pattern or text painted on a road surface.

The light may be light generated by a lamp provided in the nearby vehicle. The light may be light generated by a street light. The light may be solar light.

The road may include a road surface, a curve, and slopes, such as an upward slope and a downward slope.

The structure may be a body located around the road in the state of being fixed onto the ground. For example, the structure may include a streetlight, a roadside tree, a building, a traffic light, a bridge, a curb, and a wall.

The geographical feature may include a mountain and a hill.

In addition, the object may be classified as a movable object or a stationary object. For example, the movable object may be a concept including a moving nearby vehicle and a moving pedestrian. For example, the stationary object may be a concept including a traffic signal, a road, a structure, a stopped nearby vehicle, and a stopped pedestrian.

The object detection apparatus 300 may include a camera 310, a radar 320, a lidar 330, an ultrasonic sensor 340, an infrared sensor 350, and a processor 370.

In some implementations, the object detection apparatus 300 may further include other components in addition to the aforementioned components, or may not include some of the aforementioned components.

The camera 310 may be located at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

Using various image processing algorithms, the camera 310 may acquire location information of an object, information on a distance to the object, and information on speed relative to the object.

For example, based on change in size over time of an object in acquired images, the camera 310 may acquire information on a distance to the object and information on speed relative to the object.

For example, the camera 310 may acquire the information on a distance to the object and the information on speed relative to the object, by using a pin hole model or profiling a road surface.

For example, the camera 310 may acquire the information on a distance to the object and the information on the speed relative to the object, based on information on disparity in stereo images acquired by a stereo camera 310a.

For example, the camera 310 may be disposed near a front windshield in the vehicle 100 in order to acquire images of the front of the vehicle 100. Alternatively, the camera 310 may be disposed around a front bumper or a radiator grill.

For example, the camera 310 may be disposed near a rear glass in the vehicle 100 in order to acquire images of the rear of the vehicle 100. Alternatively, the camera 310 may be disposed around a rear bumper, a trunk, or a tailgate.

For example, the camera 310 may be disposed near at least one of the side windows in the vehicle 100 in order to acquire images of the side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object.

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme.

The lidar 330 may be implemented as a drive type lidar or a non-drive type lidar.

When implemented as the drive type lidar, the lidar 330 may rotate by a motor and detect an object in the vicinity of the vehicle 100.

When implemented as the non-drive type lidar, the lidar 330 may utilize a light steering technique to detect an object located within a predetermined distance from the vehicle 100. The vehicle 100 may include a plurality of non-driving type lidars 330.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 350 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The processor 370 may control the overall operation of each unit of the object detection apparatus 300.

The processor 370 may detect or classify an object by comparing pre-stored data with data sensed by the camera 310, the radar 320, the lidar 330, the ultrasonic sensor 340, and the infrared sensor 350.

The processor 370 may detect and track an object based on acquired images. The processor 370 may, for example, calculate the distance to the object and the speed relative to the object.

For example, the processor 370 may acquire information on the distance to the object and information on the speed relative to the object based on a variation in size over time of the object in acquired images.

For example, the processor 370 may acquire information on the distance to the object or information on the speed relative to the object by using a pin hole model or by profiling a road surface.

For example, the processor 370 may acquire information on the distance to the object and information on the speed relative to the object based on information on disparity in stereo images acquired from the stereo camera 310a.

The processor 370 may detect and track an object based on a reflection electromagnetic wave which is formed as a result of reflection a transmission electromagnetic wave by the object. Based on the electromagnetic wave, the processor 370 may, for example, calculate the distance to the object and the speed relative to the object.

The processor 370 may detect and track an object based on a reflection laser light which is formed as a result of reflection of transmission laser by the object. Based on the laser light, the processor 370 may, for example, calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may, for example, calculate the distance to the object and the speed relative to the object.

The processor 370 may detect and track an object based on reflection infrared light which is formed as a result of reflection of transmission infrared light by the object. Based on the infrared light, the processor 370 may, for example, calculate the distance to the object and the speed relative to the object.

In some implementations, the object detection apparatus 300 may include a plurality of processors 370 or may not include the processor 370. For example, each of the camera 310, the radar 320, the lidar 330, the ultrasonic sensor 340, and the infrared sensor 350 may include its own processor.

In the case where the object detection apparatus 300 does not include the processor 370, the object detection apparatus 300 may operate under control of the controller 170 or a processor inside the vehicle 100.

The object detection apparatus 300 may operate under control of the controller 170.

The communication apparatus 400 is configured to perform communication with an external device. Here, the external device may be a nearby vehicle, a mobile terminal, or a server.

To perform communication, the communication apparatus 400 may include at least one selected from among a transmission antenna, a reception antenna, a Radio Frequency (RF) circuit capable of implementing various communication protocols, and an RF device.

The communication apparatus 400 may include a short-range communication unit 410, a location information unit 420, a V2X communication unit 430, an optical communication unit 440, a broadcast transmission and reception unit 450, an Intelligent Transport Systems (ITS) communication unit 460, and a processor 470.

In some implementations, the communication apparatus 400 may further include other components in addition to the aforementioned components, or may not include some of the aforementioned components.

The short-range communication unit 410 is configured to perform short-range communication. The short-range communication unit 410 may support short-range communication using at least one selected from among Bluetooth^{™}, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include a Global Positioning System (GPS) module or a Differential Global Positioning System (DGPS) module.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian (V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some implementations, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic volume information from the traffic system and provide the traffic volume information to the controller 170. In another example, the ITS communication unit 460 may receive a control signal from the traffic system, and provide the control signal to the controller 170 or a processor provided in the vehicle 100.

The processor 470 may control the overall operation of each unit of the communication apparatus 400.

In some implementations, the communication apparatus 400 may include a plurality of processors 470, or may not include the processor 470.

In the case where the communication apparatus 400 does not include the processor 470, the communication apparatus 400 may operate under control of the controller 170 or a processor of a device inside of the vehicle 100.

In addition, the communication apparatus 400 may implement a vehicle display device, together with the user interface apparatus 200. In this case, the vehicle display device may be referred to as a telematics device or an Audio Video Navigation (AVN) device.

The communication apparatus 400 may operate under control of the controller 170.

The driving manipulation apparatus 500 is configured to receive a user input for driving the vehicle 100.

In the manual mode, the vehicle 100 may operate based on a signal provided by the driving manipulation apparatus 500.

The driving manipulation apparatus 500 may include a steering input unit 510, an acceleration input unit 530, and a brake input unit 570.

The steering input unit 510 may receive a user input with regard to the direction of travel of the vehicle 100. The steering input unit 510 may take the form of a wheel to enable a steering input through the rotation thereof. In some implementations, the steering input unit may be provided as a touchscreen, a touch pad, or a button.

The acceleration input unit 530 may receive a user input for acceleration of the vehicle 100. The brake input unit 570 may receive a user input for deceleration of the vehicle 100. Each of the acceleration input unit 530 and the brake input unit 570 may take the form of a pedal. In some implementations, the acceleration input unit or the break input unit may be configured as a touch screen, a touch pad, or a button.

The driving manipulation apparatus 500 may operate under control of the controller 170.

The vehicle drive apparatus 600 is configured to electrically control the operation of various devices of the vehicle 100.

The vehicle drive apparatus 600 may include a power train drive unit 610, a chassis drive unit 620, a door/window drive unit 630, a safety apparatus drive unit 640, a lamp drive unit 650, and an air conditioner drive unit 660.

In some implementations, the vehicle drive apparatus 600 may further include other components in addition to the aforementioned components, or may not include some of the aforementioned components.

In addition, the vehicle drive apparatus 600 may include a processor. Each unit of the vehicle drive apparatus 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 611 may perform electronic control of the engine. As such the power source drive unit 611 may control, for example, the output torque of the engine. The power source drive unit 611 may adjust the output toque of the engine under control of the controller 170.

In the case where an electric motor is the power source, the power source drive unit 611 may control the motor. The power source drive unit 611 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

In addition, in the case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

In addition, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

In addition, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive apparatus 600 may include a processor. Each unit of the vehicle drive device 600 may include its own processor.

The vehicle drive apparatus 600 may operate under control of the controller 170.

The vehicle travel system 700 is a system for controlling the overall driving operation of the vehicle 100. The vehicle travel system 700 may operate in the autonomous driving mode.

The vehicle travel system 700 may include the driving system 710, the parking-out system 740, and the parking system 750.

In some implementations, the vehicle travel system 700 may further include other components in addition to the aforementioned components, or may not include some of the aforementioned component.

In addition, the vehicle travel system 700 may include a processor. Each unit of the vehicle travel system 700 may include its own processor.

In addition, in some implementations, in the case where the vehicle travel system 700 is implemented as software, the vehicle travel system 700 may be a subordinate concept of the controller 170.

In addition, in some implementations, the vehicle travel system 700 may be a concept including at least one selected from among the user interface apparatus 200, the object detection apparatus 300, the communication apparatus 400, the driving manipulation apparatus 500, the vehicle drive apparatus 600, the navigation system 770, the sensing unit 120, and the controller 170.

The driving system 710 may perform driving of the vehicle 100.

The driving system 710 may perform driving of the vehicle 100 by providing a control signal to the vehicle drive apparatus 600 based on navigation information from the navigation system 770.

The driving system 710 may perform driving of the vehicle 100 by providing a control signal to the vehicle drive apparatus 600 based on information on an object received from the object detection apparatus 300.

The driving system 710 may perform driving of the vehicle 100 by providing a control signal to the vehicle drive apparatus 600 based on a signal from an external device through the communication apparatus 400.

The driving system 710 may be a system which includes at least one of the user interface apparatus 200, the object detection apparatus 300, the communication apparatus 400, the driving manipulation apparatus 500, the vehicle driving device 600, the navigation system 770, the sensing unit 120, and the controller 170, and which performs driving of the vehicle 100.

The driving system 710 may be referred to as a vehicle driving control apparatus.

The parking-out system 740 may perform an operation of pulling the vehicle 100 out of a parking space.

The parking-out system 740 may perform an operation of pulling the vehicle 100 out of a parking space, by providing a control signal to the vehicle drive apparatus 600 based on navigation information from the navigation system 770.

The parking-out system 740 may perform an operation of pulling the vehicle 100 out of a parking space, by providing a control signal to the vehicle drive apparatus 600 based on information on an object received from the object detection apparatus 300.

The parking-out system 740 may perform an operation of pulling the vehicle 100 out of a parking space, by providing a control signal to the vehicle drive apparatus 600 based on a signal received from an external device.

The parking-out system 740 may be a system which includes at least one of the user interface apparatus 200, the object detection apparatus 300, the communication apparatus 400, the driving manipulation apparatus 500, the vehicle driving device 600, the navigation system 770, the sensing unit 120, and the controller 170, and which performs an operation of pulling the vehicle 100 out of a parking space.

The parking-out system 740 may be referred to as a vehicle parking-out control apparatus.

The parking system 750 may perform an operation of parking the vehicle 100 in a parking space.

The parking system 750 may perform an operation of parking the vehicle 100 in a parking space, by providing a control signal to the vehicle drive apparatus 600 based on navigation information from the navigation system 770.

The parking system 750 may perform an operation of parking the vehicle 100 in a parking space, by providing a control signal to the vehicle drive apparatus 600 based on information on an object received from the object detection apparatus 300.

The parking system 750 may perform an operation of parking the vehicle 100 in a parking space, by providing a control signal to the vehicle drive apparatus 600 based on a signal from an external device.

The parking system 750 may be a system which includes at least one of the user interface apparatus 200, the object detection apparatus 300, the communication apparatus 400, the driving manipulation apparatus 500, the vehicle driving device 600, the navigation system 770, the sensing unit 120, and the controller 170, and which performs an operation of parking the vehicle 100.

The parking system 750 may be referred to as a vehicle parking control apparatus.

The navigation system 770 may provide navigation information. The navigation information may include at least one selected from among map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some implementations, the navigation system 770 may update pre-stored information by receiving information from an external device through the communication apparatus 400.

In some implementations, the navigation system 770 may be classified as an element of the user interface apparatus 200.

The sensing unit 120 may sense the state of the vehicle. The sensing unit 120 may include an Inertial Navigation Unit (IMU) sensor, a collision sensor, a wheel sensor, a speed sensor, a gradient sensor, a weight sensor, a heading sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

In addition, the IMU sensor may include at least one of an accelerometer, a gyro sensor, and a magnetic sensor.

The sensing unit 120 may acquire sensing signals with regard to, for example, vehicle attitude information, vehicle motion information, vehicle yaw information, vehicle roll information, vehicle pitch information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, out-of-vehicle illumination information, information about the pressure applied to an accelerator pedal, and information about the pressure applied to a brake pedal.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The sensing unit 120 may generate vehicle state information based on sensing data. The vehicle state information may be information that is generated based on data sensed by various sensors provided inside the vehicle 100.

For example, the vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

In addition, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some implementations, the memory 140 may be integrally formed with the controller 170, or may be provided as an element of the controller 170.

The controller 170 may control the overall operation of each unit inside the vehicle 100. The controller 170 may be referred to as an Electronic Controller (ECU).

The power supply unit 190 may supply power required to operate each component under control of the controller 170. In particular, the power supply unit 190 may receive power from, for example, a battery inside the vehicle 100.

At least one processor and the controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

### First Implementation

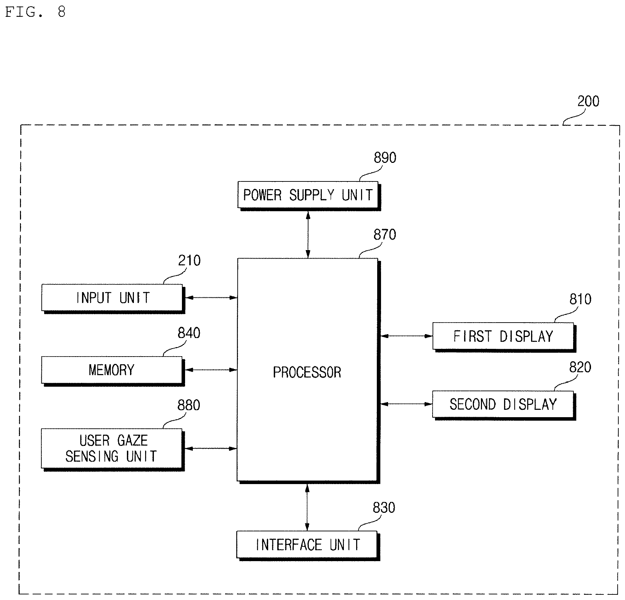

FIG. 8 is a block diagram illustrating an example user interface apparatus according to a first implementation of the present disclosure.

A user interface apparatus 200 may include: an input unit 210, a display unit 251, an interface unit 830, a memory 840, a processor 870, and a power supply unit 890. The display unit 251 may include a first display 810 and a second display 820.

The input unit 210 is to receive information from a user. Data collected by the input unit 210 may be analyzed by the processor 870 and processed into the user's control command.

The input unit 210 may detect the user's gesture on the first display 810.

The user's gesture may include a one-dimensional gesture like touching, a two-dimensional gesture like dragging, and a three-dimensional gesture like moving in a space.

The input unit 210 may include at least one of a gesture input unit 212 or a touch input unit 213.

The gesture input unit 212 may convert a user's gesture input into an electrical signal. The electrical signal may be provided to the processor 870 or the controller 170.

The gesture input unit 212 may include an internal camera or an infrared sensor capable of acquiring an image of the inside of a vehicle.

In some implementations, the internal camera may be an RBG camera and/or a B/W camera capable of capturing a black-and-white image. In this case, the gesture input unit 212 may sense a user's two-dimensional input.

In some implementations, the gesture input unit 212 may include a light output unit for outputting a plurality of infrared lights, or a plurality of image sensors.

In some implementations, the gesture input unit 212 may sense a user's three-dimensional gesture input. To this end, the gesture input unit 212 may be configured as a depth camera. The depth camera may be a stereo-type camera.

The touch input unit 213 may convert a user's touch input into an electrical signal. The electrical signal may be provided to the processor 870 or the controller 170.

The touch input unit 213 may include a touch sensor for sensing a user's touch input.

The touch input unit 213 may be integrally formed with the first display 810 to implement a touch screen.

In some implementations, the touch input unit 213 may form an inter-layer structure together with the first display 810 to implement a touch screen.

The first display 810 configured as above may provide an input interface and an output interface between the vehicle 100 and a user.

The first display 810 may display graphic objects corresponding to diverse information.

The graphic object may include at least one of a circle, a polygon, or a graphic image. The graphic image may be a finger-shaped image. In doing so, a user is allowed to recognize the graphic object intuitively, increasing a recognition rate.

The first display 810 may include at least one of a Liquid Crystal Display (LCD), a Thin Film Transistor-Liquid Crystal Display (TFT LCD), an Organic Light-Emitting Diode (OLED), a flexible display, a 3D display, or an e-ink display.

The first display 810 may be integrally formed with the touch input unit 213 or form an inter-layer structure together with the touch input unit 213 so as to implement a touch screen.

The first display 810 may be disposed at one region inside the vehicle 100.

For example, the first display 810 may be implemented in one region of an instrument panel (see reference numerals 251a and 251b in FIG. 3 and reference numeral 251e in FIG. 4).

The first display 810 may be controlled by the processor 870.

Description about the display unit 251 shown in FIG. 7 may be applied to the first display 810 shown in FIG. 8.

Hereinafter, an example in which the first display 810 is implemented as a Center Information Display (CID) of a vehicle is described.

The second display 820 may display a graphic object corresponding to diverse information.

The second display 820 may include at least one of a Liquid Crystal Display (LCD), a Thin Film Transistor-Liquid Crystal Display (TFT LCD), an Organic Light-Emitting Diode (OLED), a flexible display, a 3D display, or an e-ink display.

The second display 820 may be spaced apart from the first display.

The second display 820 may be implemented as a Head Up Display (HUD).

When the second display 820 is implemented as a HUD, the second display 820 may include a projection module to output information through an image projected onto a windshield or a window.

When the second display 820 is implemented as a HUD, the second display 820 may project an image onto the entire or part of a windshield or a window.

For example, the second display 820 may project an image onto a windshield or a window to overlap the image with an exterior environment of the vehicle, which is actually viewed through the windshield, thereby enabled to realize Augmented Reality (AR).

Alternatively, when the second display 820 is implemented as a HUD, the second display 820 may project an image to a combiner to output information.

The second display 820 may be controlled by the processor 270 so that an image displayed on the first display 810 and a graphic object moving in response to a gesture on the first display 810 are displayed on the second display 820.

An image displayed on the second display 820 may be an image identical to the image displayed on the first display 810.

An image displayed on the second display 820 may be an image which is changed from the image displayed on the first display 810 by a degree where the modification does not change information of the image displayed on the first display 810.

The second display 820 may be controlled by the processor 870 so that a portion of the image displayed on the first display 810 is displayed on the second display 820.

The second display 820 may be controlled by the processor 870 based on a signal provided from the input unit 210.

For example, the second display 820 may be controlled by the processor 870 based on a signal provided from the touch input unit 213.

For example, the second display 820 may be controlled by the processor 870 based on a signal provided from an internal camera or an infrared sensor.

The second display 820 may be controlled by the processor 870 to display driving situation information.

For example, the second display 820 may be controlled by the processor 870 so that an image associated with the driving situation information is displayed overlapping an image which is displayed on the second display 820.

For example, the second display 820 may be controlled by the processor so that an image displayed on the first display 810 is displayed on one region of an image displayed on the second display 820 and an image associated with the driving situation information is displayed on the other region of the image displayed on the second display 820.

The above description about the display unit 251 may be applied to the second display 820.

Hereinafter, an example in which the second display 820 is implemented as a HUD for displaying an image on a windshield of a vehicle is described.

The interface unit 830 may function as a channel with various types of external devices connected to the vehicle 100. The interface unit 830 may exchange information, data or a signal with another device included in the vehicle 100. The interface unit 830 may transmit received information, data, or a signal to the processor 870. The interface unit 830 may transmit information, data, or a signal, which is generated or processed in the processor 870, to another device.

For example, the interface unit 830 may acquire driving situation information from at least one of an object detection apparatus 300, a communication apparatus 400, or another device.

For example, the interface unit 830 may be electrically connected in a wired or wireless manner.

The interface unit 830 may function as a channel for providing electrical energy to a mobile terminal connected thereto.

The interface unit 830 may be separated from or integrated with the above-described interface unit in terms of structure and function.

Description about the above-described interface unit 130 may be applied to the interface unit 830.

The memory 840 may store various types data required for overall operation of the user interface apparatus, such as a program for processing or control of the processor 870.

The memory 840 may be separated from or integrated with the above-described memory 140.

In some implementations, the memory 840 may be integrally formed with the processor 870 or may be implemented as a subordinate element of the processor 870.

The processor 870 may control overall operation of each unit of the user interface apparatus 200.

The processor 870 may be implemented using at least one of the following: Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, or electric units for the implementation of other functions.

In addition, the interface unit 830, the memory 840, the first display 810, the second display 820, and the power supply unit 890 may have their own processors or may be integrated with the processor 870.

The processor 870 may control the first display 810 and/or the second display 820 to display graphic objects corresponding to diverse information.

The processor 870 may receive a signal regarding a user's gesture from the input unit 210.

A signal regarding a gesture may be an electrical signal converted by the gesture input unit 212 from a user's gesture input.

A signal regarding a gesture may be information about a gesture, which is generated by a processor in the input unit 210 that has received an electrical signal converted by the gesture input unit 212.

The processor 870 may control the first display 810 to display graphic objects corresponding to diverse information.

According to a selected control mode, the processor 870 may control the second display 820 based on a user input on the first display 810, which is acquired through the input unit 210.

The control mode may include a first mode for controlling the first display 810 based on a user input on the first display 810. The control mode may include a second mode for controlling the second display 820 based on a user input on the first display 810.

The control mode may be selected based on a user input or may be selected by the processor 870.

The processor 870 may determine a control mode based on an operational state of the first display 810.

For example, when a user input on the first display 810 is sensed while a screen of the first display 810 is turned off, the processor 870 may determine that the control mode is a second mode and may perform a control operation.

For example, when a user input on the first display 810 is sensed when the screen of the first display 810 is turned on, the processor 870 may determine that the control mode is the first mode and may perform a control operation.

When a user's gaze toward the second display 820 is sensed by a user gaze sensing unit 880, the processor 870 may control the second display 820 based on a user input on the first display 810.

When a user's gaze toward the second display 820 is sensed by the user gaze sensing unit 880, the processor 870 may set the control mode to the second mode.

When a user's gaze is determined by the user gaze sensing unit 880 to be directed toward the front of the vehicle 100 in which the second display 820 is implemented, the processor 870 may set the control mode to the second mode.

The processor 870 may switch the control mode based on a user input.

When a pre-stored mode switch user input is sensed, the processor 870 may switch the control mode from the first mode to the second mode or from the second mode to the first mode.

When a mode switch user input pre-stored in the memory 840 is sensed in the first mode, the processor 870 may set the control mode to the second mode. When a mode switch user input pre-stored in the memory 840 is sensed in the second mode, the processor 870 may set the control mode to the first mode.

When a user's voice input satisfying a condition stored in the memory 840 is received through the voice input unit 211, the processor 870 may switch the control mode. In this case, the mode switch user input may be a preset user voice input.

When a user's gesture input satisfying a condition stored in the memory 840 is received through the gesture input unit 212, the processor 870 may switch the control mode. In this case, the mode switch user input may be a preset user gesture input.

For example, a user's gesture input for switching the control mode may be a gesture input (which is called swipe) that moves from one side of the first display 810 to the other side. When a swipe gesture input on the first display 810 is received, the processor 870 may switch the control mode.

For example, when a gesture input of swiping from left to right on the first display 810 is received, the processor 870 may switch the control mode from the first mode to the second mode. When a gesture input of swiping from right to left on the first display 810 is received, the processor 870 may switch the control mode from the second mode to the first mode.

When a user's touch input satisfying a condition stored in the memory 840 is received through the touch input unit 213, the processor 870 may switch the control mode. In this case, the mode switch user input may be a preset user touch input.

For example, a user touch input for switching the control mode may be an input of touching the first display 810 twice or more in a preset time. When a user input of touching the first display 810 twice or more in a preset time is received, the processor 870 may switch the control mode.

For example, a user input for switching the control mode may be an input of touching the first display 810 with pressure equal to or greater than preset value. When a user input of touching the first display 810 with pressure equal to or greater than the preset value is received, the processor 870 may switch the control mode.

For example, a user touch input for switching the control mode may be an input (which is so called "swipe")that moves from one point to another point on the first display 810 while touching the first display 810. When a swipe touch input on the first display 810 is received, the processor 870 may switch the control mode.

For example, when a touch input of swiping from left to right on the first display 810 is received, the processor 870 may switch the control mode from the first mode to the second mode. When a touch input of swiping from right to left on the first display 810 is received, the processor 870 may switch the control mode from the second mode to the first mode.

When a user's button input is received through the mechanical input unit 214, the processor 870 may switch the control mode. In this case, the mode switch user input may be an input of pushing a control mode button by a user.

The processor 870 may acquire driving situation information from at least one of the object detection apparatus 300, the communication apparatus 400, or another device through the interface unit 830. The processor 870 may determine the control mode based on the driving situation information.

For example, the processor 870 may determine the control mode based on a speed of the vehicle.

For example, when a speed of the vehicle is equal to or greater than a preset value, the processor 870 may determine that the control mode is the second mode.

The processor 870 may determine an attention level required for a user based on driving situation information. If the determined attention level is equal to or greater than a preset value, the processor 870 may determine that the control mode is the second mode. If the determined attention level is smaller than the preset value, the processor 870 may determine that the control mode is the first mode.

For example, when the vehicle is now driving on a straight road and no object exists on a path of travel of the vehicle, the processor 870 may determine that a "low" attention level is required for a user. If a user input on the first display 810 is acquired at the "low" attention level required for a user, the processor 870 may control the first display 810 based on the user input. That is, the processor 870 may control the first display 810 and/or the second display 820 to be switched to the first mode.

For example, when an object exists on a path of travel of the vehicle or a speed of the vehicle is equal to or greater than a preset value, the processor 870 may determine that a "high" attention level is required for a user. If a user input on the first display 810 is acquired at the "high" attention level required for a user, the processor 870 may control the second display 820 based on the user input. That is, the processor 870 may control the first display 810 and/or the second display 820 to be switched to the second mode.

In doing so, in a situation where driver attention is required, a driver is allowed to manipulate only contents displayed on a HUD so as to prevent any accident caused by the driver's distraction.

The processor 870 may determine the control mode based on image information displayed on the second display 820.

When a user input on the first display 810 is received while a preset type of image is displayed on the second display 820, the processor 870 may determine that the control mode is the second mode. That is, when a user input on the first display 810 is received while a preset type of image is displayed on the second display 820, the processor 870 may control the second display 820 based on the user input.

The memory 840 may store first and second groups of types of image to be displayed on the second display 820.

When a user input on the first display 810 is received while an image corresponding to the first group is displayed on the second display 820, the processor 870 may control the first display 810 based on the user input.

When a user input on the first display 810 is received while an image corresponding to the second group is displayed on the second display 820, the processor 870 may control the second display 820 based on the user input.

When a user input on the first display 810 is sensed and the control mode is the first mode, the processor 870 may control the second display 820 to display at least part of an image displayed on the first display 810.

When a user input on the first display 810 is sensed and the control mode is the first mode, the processor 870 may control the second display 820 to display at least part of an image displayed on the first display 810 for a preset time. When a user input on the first display 810 is sensed and the control mode is the first mode, the processor 870 may control the second display 820 to display, for a preset time, at least part of an image displayed on the first display 810.

When a user input on the first display 810 is sensed and the control mode is the first mode, the processor 870 may control the second display 820 so that at least part of an image displayed on the first display 810 is displayed on the second display 820 as long as the user input is sensed.

For example, while a user touches the first display 810, the processor 870 may control the second display 820 so that at least part of an image displayed on the first display 810 is displayed on the second display 820.

For example, when the vehicle is being traveling, the processor 870 may control the second display 820 so that at least part of an image displayed on the first display 810 is displayed on the second display 820. The processor 870 may determine, based on a signal provided from the vehicle drive apparatus 600, whether or not the vehicle 100 is traveling.

When an image currently displayed or to be displayed on the first display 810 is displayed on the second display 820, the processor 870 may control the first display 810 so that the image on the first display 810 is reduced in brightness.

Alternatively, when an image currently displayed or to be displayed on the first display 810 is displayed on the second display 820, the processor 870 may perform a control action to turn off a screen of the first display 810. That is, when an image possibly to be displayed on the first display 810 is displayed on the second display 820, the processor 870 may perform a control action so that the image is not displayed on the first display 810.

The user interface apparatus 200 configured as above may induce a driver to fix his/her gaze to a windshield, thereby preventing the driver's distraction and enhancing driving safety.

The processor 870 may control the second display 820 so that a user input-associated portion of an image displayed on the first display is displayed on the second display 820.

The processor 870 may determine a user input-associated portion of an image displayed on the first display 810, based on a user input on the first display 810.

On the second display 820, the processor 870 may display a content, to which a user input is applied from among contents displayed on the first display 810, and a portion (or a region) including a content associated with the above content.

For example, when a radio menu item, an MP3 menu item, and a mobile terminal menu item, which are for controlling outputting of the sound output unit 252, are displayed on the first display 810, a user may select the radio menu item. The processor 870 may perform a control action so that an image, which includes the radio menu selected by the user and the MP3 menu item and the mobile terminal menu item each associated with the radio menu item, is displayed on the second display 820.

If a preset time has passed without any additional user input, the processor 870 may stop displaying, on the second display 820, at least part of the image displayed on the first display 810.

When a user input on the first display is sensed after at least part of an image displayed on the first display 810 is displayed on the second display 820 for a certain time and then disappears, the processor 870 may control the second display 820 based on the user input.

The processor 870 may control the second display 820 to display a graphic object to correspond to a user input on the first display 810.

The graphic object may include at least one of a circle, a polygon, or a graphic image.

The graphic object may be a finger-shaped image. Using this, a user is allowed to recognize the graphic object intuitively, thereby increasing a recognition rate.

For example, the processor 870 may control the second display 820 so that a graphic object moves on the second display 820 by an actual moving distance of a gesture.

For example, the processor 870 may control the second display 820 so that a graphic object moves in proportion to a moving distance of a gesture. In this case, a moving distance of the graphic object on the second display 820 may not coincide with an actual moving distance of the gesture.

For example, the processor 870 may control the second display 820 so that three-dimensional (3D) movement of a gesture is converted is converted by a preset algorithm into two-dimensional (2D) movement of a graphic object and the two-dimensional movement is displayed on the second display 820.

The preset algorithm may be used to project three-dimensional movement of a gesture onto the first display 810 with reference to a sensor or a camera of the gesture input unit 212 so as to convert the 3D movement into 2D movement.

The processor 870 870 may control the second display 820 based on a signal provided from the input unit 210.

The processor 870 may determine a user's control intention based on the signal provided from the input unit 210.

The processor 870 may control the second display 820 based on the user's control intention.

The user's control intention may include a control element indicating what to control and a control method indicating how to control, the user's control intention may be determined by the processor 870.

For example, when it is determined that a user has input a gesture so as to execute a menu, the processor 870 may control the second display 820 to execute the menu.

For example, when it is determined that a user inputs a gesture of moving a finger to execute a menu, the processor 870 may control the second display 820 to display a graphic object which moves toward the menu.

The processor 870 may control the second display 820 based on a signal provided from the gesture input unit 212.

The processor 870 may determine the user's control intention based on a signal provided from the gesture input unit 212. Alternatively, the processor 870 may control the second display 820 based on a signal provided from the touch input unit 213.

For example, when it is determined, based on a signal provided from the input unit 210, that a gesture is sensed, the processor 870 may perform a control action to turn on the second display 820.

For example, when it is determined, based on a signal provided from the vehicle drive apparatus 600, that the vehicle 100 is traveling, the processor 870 may perform a control action to turn on the second display 820.

For example, when turning on the second display 820, the processor 870 may control the first display 810 so that an image displayed on the first display 810 is reduced in brightness or the first display 810 is turned off.

The user interface apparatus 200 configured as above may induce a driver to fix his/her gaze to a windshield during traveling of a vehicle, thereby preventing the driver's distraction and enhancing driving safety.

The processor 870 may control the second display 820 to display a portion of an image displayed on the first display 810.

For example, the processor 870 may control the second display 820 to display a control intention-associated portion of an image displayed on the first display 810.

A user's control intention may include a control element indicating what to control and a control method indicating how to control, and the user's control intention may be determined by the processor 870.

The control intention-associated portion of the image displayed on the first display 810 may include a control element desired to be controlled directly, and auxiliary control elements relevant thereto.

For example, when a user inputs a gesture of selecting one of a radio menu item, an MPT menu item, or a mobile terminal menu item in regard of outputting of the sound output unit 252, the processor 870 may control the second display 820 so that an image, which includes the radio menu item selected by the user and the MP2 menu item and the mobile terminal menu item each associated with the radio menu item, is displayed on the second display 820.

The processor 870 may control the second display 820 so that driving situation information is further displayed on the second display 820.

For example, the processor 870 may control the second display 820 so that an image associated with driving situation information is displayed to overlap an image which is displayed on the first display 810.

For example, the processor 870 may control the second display 820 so that an image displayed on the first display 810 is displayed in one region of an image displayed on the second display 820 and an image associated with driving situation information is displayed on the other region of the image displayed on the second display 820.

The user interface apparatus 200 configured as above may allow a user to achieve, by inputting a gesture on the first display 810, the same effect as that of the case of inputting a gesture on a control element of the second display 820.

The user interface apparatus 200 configured as above may control a vehicle and/or a display unit in a user friendly way and to prevent a driver's distraction.

A method in which the processor 870 controls displaying a graphic object will be described later in details.

The user interface apparatus 200 may further include the user gaze sensing unit 880.

The user gaze sensing unit 880 may be separated from or integrated with the input unit 210 in terms of structure or function.

The user gaze sensing unit 880 may include at least one of an infrared sensor or an image sensor to sense a user's gaze.

The user gaze sensing unit 880 may be implemented as an internal camera to acquire an image of the inside of a vehicle.

In some implementations, the internal camera may be an RBG camera or a black/white (B/W) camera capable of capturing a black/white (B/W) image.

The user gaze sensing unit 880 may perform image processing of the image of the inside of the vehicle, which is acquired from the internal camera, to sense a user's gesture input spaced from the first display.

For example, the user gaze sensing unit 880 may sense a user's gesture input applied within 20cm from the first display.

The user gaze sensing unit 880 may determine, based on driving situation information, whether or not the user is viewing the front of the vehicle 100.

The user gaze sensing unit 880 may acquire driving situation information from the object detection apparatus 300, the communication apparatus 400, or an external device.

For example, if a user manipulates the driving manipulation apparatus 500 in response to an object located in front of the vehicle 100, the user gaze sensing unit 880 may determine that a user is viewing the front of the vehicle 100.

For example, if a user input which has been changed to a preset degree or more is sensed through the driving manipulation apparatus 500, the user gaze sensing unit 880 may determine that the user is viewing the front of the vehicle 100.

For example, if a user input of steering the vehicle 100 by a preset angle or more is received through the steering input device 510, the user gaze sensing unit 880 may determine that the user is viewing the front of the vehicle 100.

For example, if a user input of accelerating by a preset value or more is received through the acceleration input device 530, the user gaze sensing unit 880 may determine that the user is viewing the front of the vehicle 100.

For example, a user input of decelerating by a preset value or more is received through the brake input device 570, the user gaze sensing unit 880 may determine that the user is viewing the front of the vehicle 100.

In this manner, the user gaze sensing unit 880 may indirectly determine whether or not the user's gaze is towards the front of the vehicle, even without directly sensing the user's gaze.

In addition, in the case of indirectly determining the user's gaze based on driving situation information, the user gaze sensing unit 880 may be integrated with the processor 870 in terms of structure or function. That is, the processor 870 may determine, based on the driving situation information, whether or not the user is viewing the front of the vehicle 100.

The power supply unit 890 may supply power required to operate each constituent element, under the control of the processor 870. The power supply unit 890 may be supplied with power from a battery or the like inside the vehicle 100.

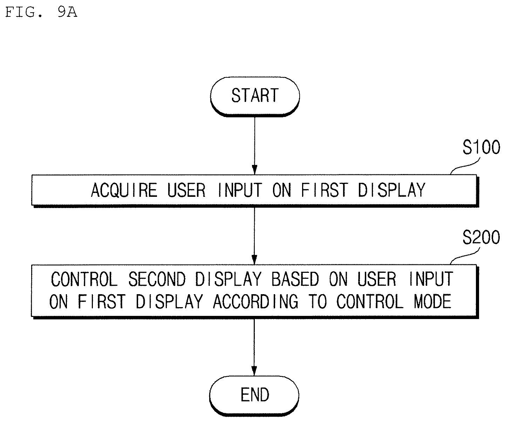

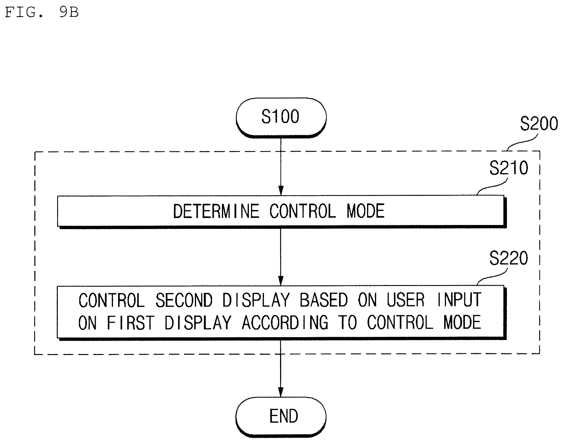

FIGS. 9A and 9B are a control flowchart of a user interface apparatus according to the first implementation of the present disclosure.

The processor 870 may acquire a user input on the first display 810 through the input unit 210 in S100.

The input unit 210 may include the voice input unit 211, the gesture input unit 212, the touch input unit 213, and the mechanical input unit 214.

The processor 870 may acquire a user input converted into an electrical signal by at least one of the voice input unit 211, the gesture input unit 212, the touch input unit 213, or the mechanical input unit 214.

The processor 870 may acquire a user input on the first display 810 through the internal camera 220. For example, the processor 870 may perform image processing on an image of the inside of the vehicle acquired from the internal camera 220. Through the image processing, the processor 870 may generate information about the user input.

According to a control mode, the processor 870 may control the second display 820 based on a user input on the first display 810 in S200.

When a user input on the first display 810 is received, the processor 870 may determine whether to control the first display 810 (the first mode) or the second display 820 (the second mode) based on the user input.

For example, the processor 870 may determine the control mode based on driving situation information acquired from at least one device of the vehicle 100 through the interface unit 830.

For example, when it is determined, based on user input information stored in the memory 840 that a first user input received, the processor 870 may determine that the control mode is the first mode.

For example, when it is determined, based on user input information stored in the memory 840, that a second user input is received, the processor 870 may determine that the control mode is the second mode.

According to the control mode, the processor 870 may control the second display 820 based on a user input on the first display 810 in S220.

For example, when it is determined, based on user input information stored in the memory 840, that a first user input is received, the processor 870 may control the first display 810 and/or the second display 820 in the first mode.

For example, when it is determined, based on user input information stored in the memory 840, that second user input is received, the processor 870 may control the first display 810 and/or the second display 820 in the second mode.

A method in which the processor 870 controls the second display 820 will be described later in details.

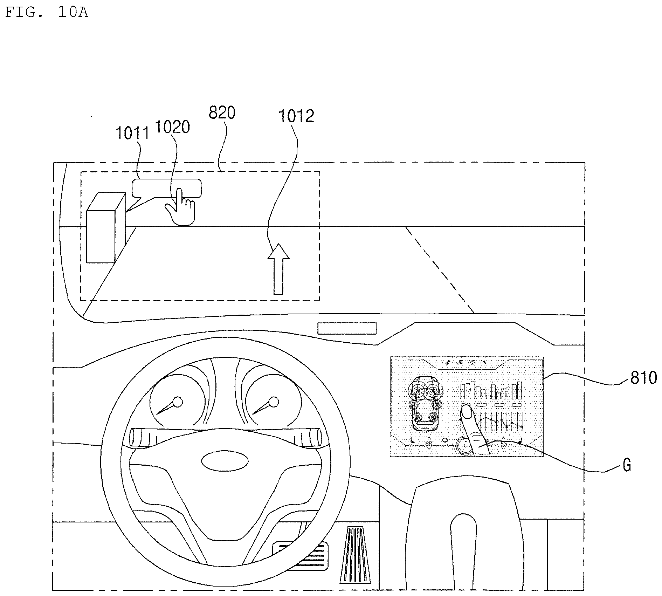

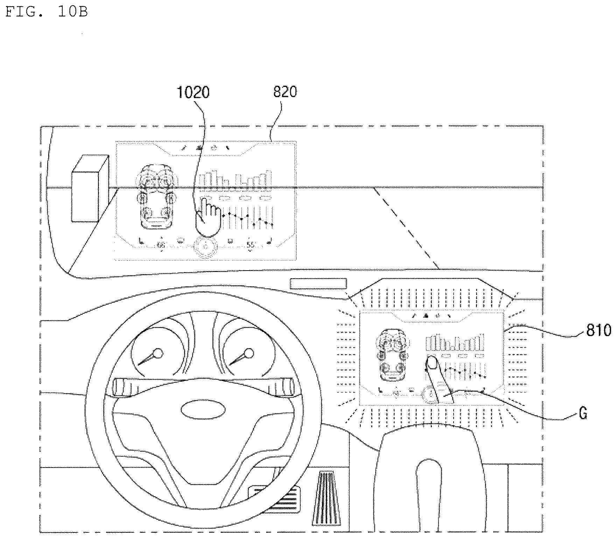

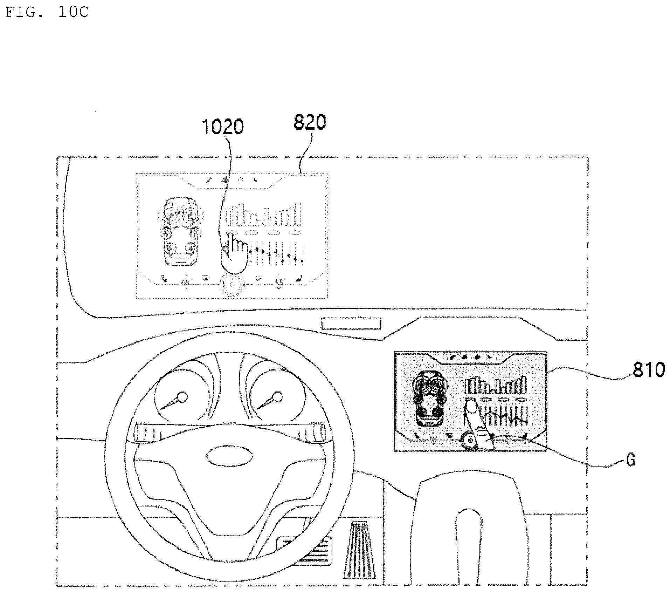

FIGS. 10A, 10B, and 10C are diagrams illustrating a user interface apparatus according to the first implementation of the present disclosure.

The processor 870 may acquire a user input G on the first display 810 through the input unit 210.

Referring to FIGS. 10A and 10B, the user interface apparatus 200 may include a touch screen in which the first display 810 and the touch input unit 210 are formed integrally.

The processor 870 may acquire a touch input G converted into an electrical signal from the touch input unit 210 of the touch screen.

According to the control mode, the processor 870 may control the second display 820 based on the user input G on the first display 810.

Referring to FIG. 10A, the second display 820 may be a HUD that projects an image to a windshield of the vehicle.

The processor 870 may control the second display 820 to display graphic objects 1011 and 1012.

When a user input G on the first display 810 is received when a screen of the first display 810 is turned off, the processor 870 may control the second display 820 based on the user input G.

For example, the processor 870 may control the second display 820 to display a graphic object 1020 at a location corresponding to the user input G when the screen of the first display 810 is turned off.

For example, the processor 870 may control the second display 820 so that a graphic object 1020 is displayed moving to correspond to the user input G while the screen of the first display 810 is turned off.

For example, when a user input on the first display 810 is not received for a preset time, the processor 870 may turn off the first display 810.

For example, if a user moves his/her finger on the touch screen while keeping the finger in contact with the touch screen, the processor 870 may control the second display 820 so that a graphic object 1020 moving in response to movement of the touching finger is displayed.

A graphic object may include at least one of a point, a line, a circle, a polygon, or a graphic object. Alternatively, the graphic object may be a finger-shaped image to increase a recognition rate so that a user is able to recognize the graphic object intuitively.

For example, the graphic object may be displaying a specific portion of an image with a different brightness level on the second display 820.

For example, the graphic object may be a pre-stored image in the shape of a human finger. The graphic object may be a real-time captured image of a user's hand. In addition, the graphic object may be any form that shows, on the second display 820, a location and/or movement of a user's gesture G on the first display 810

The processor 870 may determine, based on a signal provided from the input unit 210, coordinates of the gesture G on the first display 810, and may display a graphic object 1020 at a location corresponding to the coordinates of an image displayed on the second display 820.

The processor 870 may control the second display 820 so that a graphic object moves on the second display 820 by an actual moving distance of a gesture.

For example, when a user touches a first point on the first display 810 with his/her finger and moves the finger from the first point to a second point on the first display 810 while keeping the finger in contact with the first display 810, the processor 870 may control the second display 820 so that a graphic object 1020 moves from a first point to a second point on an image displayed on the second display 820.

In this case, a location of a second point in a coordinate system of the first display 810 is the same as a location of a second point of the graphic object 1020 in a coordinate system of an image displayed on the second display 820.

In some examples, although not illustrated in drawings, the processor 870 may control the second display 820 based on a signal provided from the gesture input unit 212.

The processor 870 may receive a user's 2D gesture input signal from the gesture input unit 212. In this case, the gesture input unit 212 may include at least one of an RGB camera, a B/W camera capable of capturing a B/W image, or an infrared sensor.

The processor 870 may receive a user's 3D gesture input signal from the gesture input unit 212. In this case, the gesture input unit 212 may be a stereo camera.

Referring to FIG. 10B, when a user input G on the first display 810 is received while a screen of the first display 810 is turned on, the processor 870 may control the first display 810 based on the user input G.

For example, the processor 870 may turn on the first display 810 when a user moves his/her finger away from the first display 810 which is configured as a touch screen.

If a user touches the touch screen when the first display 810 is turned on, the processor 870 may perform a control action so that an image displayed on the first display 810 is displayed on the second display 820.

When a user moves a finger in contact with the touch screen, the processor 870 may control the second display 820 so that a graphic object 1020 moving in response to movement of the touching finger is displayed.

Referring to FIG.10C, when an image to be displayed on the first display 810 is displayed on the second display 820, the processor 870 may control the first display 810 so that the image on the first display 810 is reduced in brightness.

For example, when it is determined, based on a signal received from the vehicle drive apparatus 600, that the vehicle 100 is traveling, the processor 870 may control the first display 810 so that an image displayed on the first display 810 is reduced in brightness or the first display 810 is turned off.

For example, when it is determined that there is no occupant other than a driver, the processor 870 may control the first display 810 so that an image displayed on the first display 810 is reduced in brightness or the first display 810 is turned off.

The user interface apparatus 200 configured as above induces a driver to fix his/her gaze to a windshield during traveling of the vehicle, thereby preventing the driver's distraction and enhancing driving safety.

Although not illustrated in the drawings, the processor 870 may control the first display 810 so that the first display 810 is turned off when an image to be displayed on the first display 810 is displayed on the second display 820.

The user interface apparatus 200 configured as above may allow a user to control the first display 810 or the second display 820 based on the same user input according to an On/Off state of the first display 810, and therefore, the user is able to manipulate the user interface apparatus conveniently.

In addition, the user interface apparatus 200 may allow a user to manipulate a content displayed on a HUD using a touch screen which is generally provided in a vehicle (e.g., a CID), without an additional device for manipulating a second display implemented as a HUD.

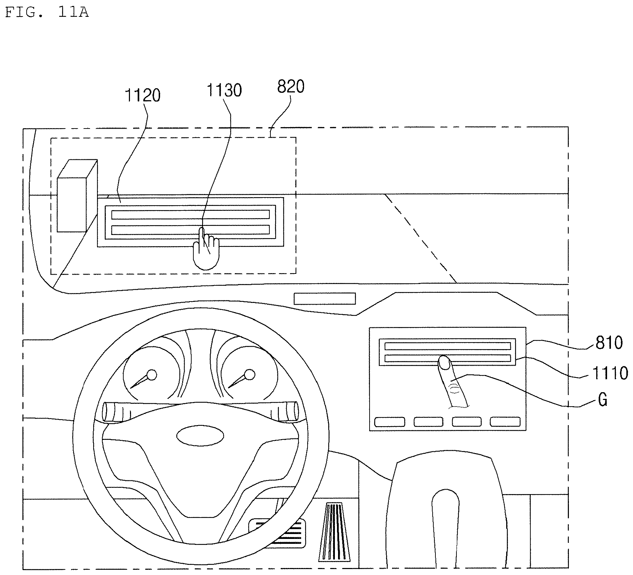

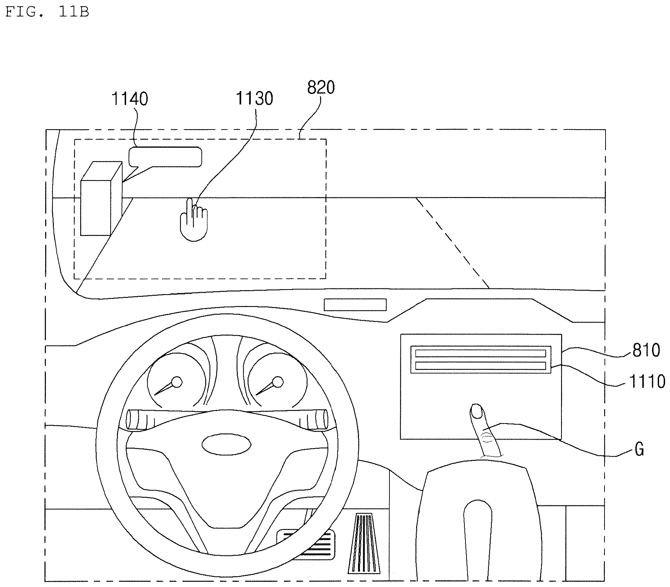

FIGS. 11A and 11B are diagrams illustrating example user interface apparatus.

The processor 870 may acquire a user input G on the first display 810 through the input unit 210.

Referring to FIGS. 11A and 11B, the user interface apparatus 200 may include a touch screen in which the first display 810 and the touch input unit 210 are integrally formed. The user interface apparatus 200 may include the second display 820 that is implemented as a HUD which projects an image onto a vehicle windshield.

The processor 870 may acquire an electrical signal of a user's touch input G from the touch input unit 210 of a touch screen.

The processor 870 may perform a control action in the first mode when the user input G on the first region of the first display 810 is sensed.

The first region may be a preset region of the first display 810.

Alternatively, the first region may be a region determined by the processor 870 based on an image displayed on the first display 810.

In the first mode, the processor 870 may control the second display 820 so that part of an image displayed on the first display 810 is displayed on the second display 820.

In the first mode, the processor 870 may control the first region to be displayed on the second display 820.

For example, the processor 870 may control the second display 820 so that a control intention-associated portion in an image displayed on the first display 810 is displayed on the second display 820.

A user's control intention may include a control element indicating what to control and a control method indicating how to control, and may be determined by the processor 870.

The control intention-associated portion in the image displayed on the first display 810 may include a control element desired to be controlled directly, and auxiliary control elements relevant thereto.

Referring to FIG. 11A, when a user input G on the first region of the first display 810 on which an upper menu 1110 is displayed is sensed, the processor 870 may control the second display 820 so that a menu 1120 is displayed on the second display 820.

The processor 870 may perform a control action so that an upper menu 1110, which includes a menu item directly associated with the gesture input G and an auxiliary menu item indirectly associated with the gesture input G, is displayed on the second display 820.

The processor 870 may control the second display 820 so that the upper menu 1110, which includes a menu item directly associated with the gesture G and a menu item indirectly associated with the gesture G, is displayed on a windshield.

The processor 870 may control the second display 820 so that a graphic object 1130 is displayed together with the menu 1120 on the windshield.

The processor 870 may control the second display 820 so that a graphic object 1130 is displayed moving to correspond to a user input G on the first region of the first display 810 on which the upper menu 1110 is displayed.

The user display apparatus 800 configured as above may efficiently provide information to a user and provide a user friendly manipulating environment.

Referring to FIG. 11B, when a user input on a region other than a first region of the first display 810 is sensed, the processor 870 may perform a control action in the second mode.

The processor 870 may control the second display 820 to display one or more contents 1140.

When the user input G on the first region of the first display 810 is sensed, the processor 870 may control the second display 820 so that a graphic object 1130 is displayed to correspond to the user input G on the first display 810.

The user interface apparatus 200 configured as above may control a content on a HUD in response to a user input sensed from the first display 810.

Thus, using a device, such as a vehicle CID, which a user is able to manipulate easily, the user is able to manipulate contents on a HUD conveniently in a similar manipulating way.

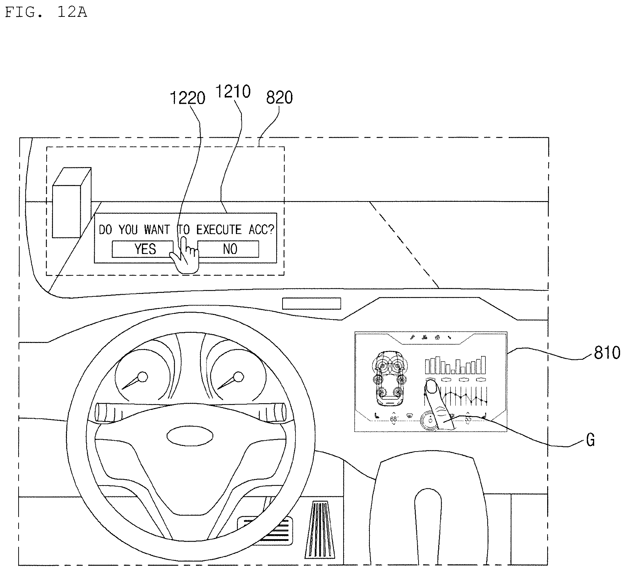

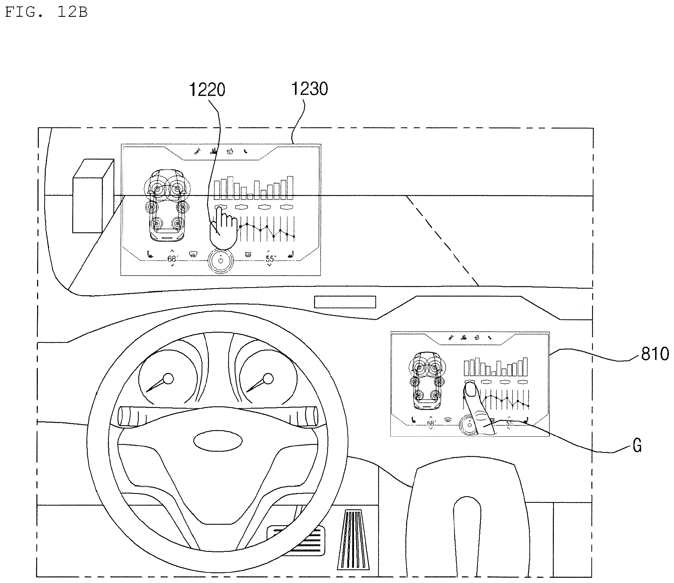

FIGS. 12A and 12B are diagrams illustrating example user interface apparatus according to the first implementation.

The processor 870 may acquire information about a user input on the first display 810 through the input unit 210.

Referring to FIGS. 12A and 12B, the user interface apparatus 200 may include a touch screen which is implemented as the first display 810 and the touch input unit 10 are integrally formed. The user interface apparatus 200 may include the second display 820 implemented as a HUD that projects an image on a windshield of a vehicle.

The processor 870 may acquire a user's touch input G converted into an electrical signal from the touch input unit 210 of the touch screen.

When the user input G on the first display 810 is sensed, the processor 870 may determine the control mode based on a content displayed on the second display 820.

If a user input G on the first display 810 is sensed while information requiring the user input G is displayed on the second display 820, the processor 870 may determine that the control mode is the second mode.

The information requiring the user input G may be defined as a content not simply providing an alarm to a user, but requiring the user to apply a certain input.

For example, the information requiring the user input G may be a menu that requires the user's selection.

For example, the information requiring the user input G may be alarming information provided to the user, and the user needs to apply a certain input to release the alarm.

For example, the information requiring the user input G may be a menu for asking whether to execute at least one function of the vehicle 100.

Referring to FIG. 12, when a user input G on the first display 810 is received while a menu 1210 for asking whether to execute an Automatic Cruise control (ACC) is displayed on the second display 820, the processor 870 may control the second display 820 so that a graphic object 1220 is displayed to correspond to the user input G.

In addition, the processor 870 may determine that the control mode is the second mode when the information requiring a user input G is being displayed on the second display 820 or when any content is not displayed on the second display 820.

Referring to FIG. 12B, when a user input G on the first display 810 is displayed while any content requiring the user input G is not displayed on the second display 820, the processor 870 may control the first display 810 and the second display 820 so that a mirroring image 1230 of an image displayed on the first display 810 is displayed on the second display 820.

In this case, the processor 870 may control the first display 810 and the second display 820 so that a graphic object 1220 is displayed to correspond to the user input G on the first display 810.

Using the user interface apparatus 200 configured as above, a user is able to manipulate a HUD more intuitively. In addition, a user friendly interface may be provided.

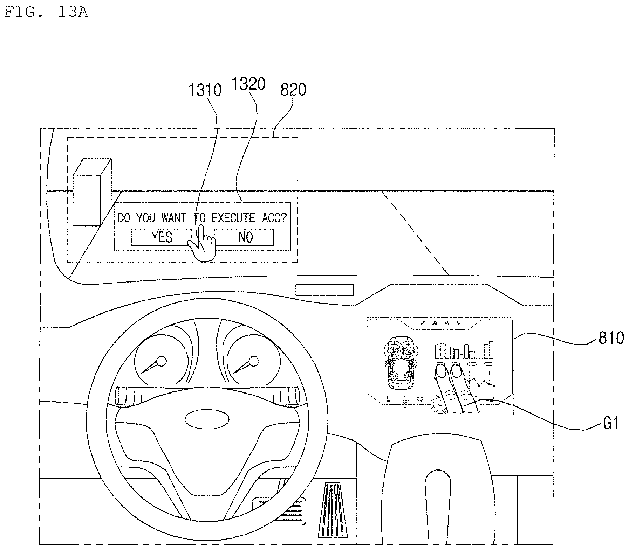

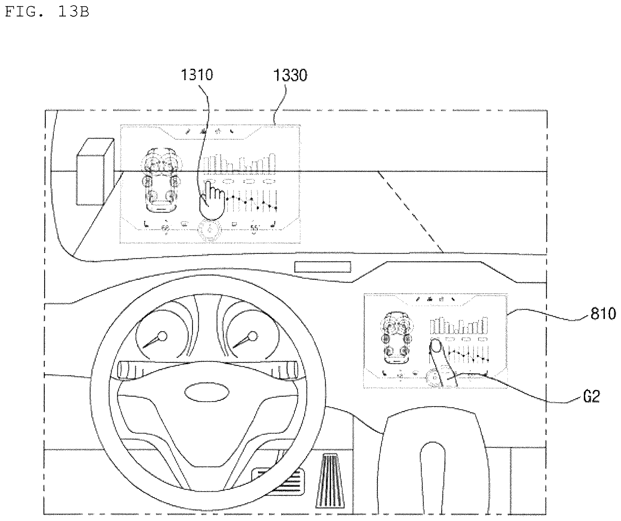

FIGS. 13A and 13B are diagrams illustrating example user interface apparatus according to the first implementation.

The processor 870 may acquire a user input G on the first display 810 through the input unit 210.

Referring to FIGS. 13A and 13B, the user interface apparatus 200 may include a touch screen in which as the first display 810 and the touch input unit 210 are integrally formed. The user interface apparatus 200 may include a second display 820 that is implemented as a HUD which projects an image on a vehicle windshield.

The processor 870 may acquire a user's touch input G converted into an electrical signal from the touch input unit 210 of the touch screen.

The processor 870 may identify first and second user inputs based on a user input acquired through the input unit 210.

For example, the first user input may be an input of touching the touch screen with a user's one finger. The second user input may be an input of touching two points on the first display 810 at the same time. The second user input may be an input of touching the touch screen with a user's two fingers.

For example, the first user input may be an input of touching the touch screen with pressure smaller than a preset level. The second user input may be an input of touching the touch screen with pressure equal to or greater than the preset level.

When the first user input is sensed, the processor 870 may determine that the control mode is the first mode. When the second user input is sensed, the processor 870 may determine that the control mode is the second mode.

Referring to FIG. 13A, when a user's input on the first display 810 is sensed as a touch input applied using two fingers, while a menu 1320 for asking whether to execute an Automatic Cruise control (ACC) is displayed on the second display 820, the processor 870 may control the touch screen and the second display 820 in the second mode.

The processor 870 may control the second display 820 so that a graphic object 1310 is displayed to correspond to a second user input (the touch input applied using two fingers) on the first display 810.

Referring to FIG. 13B, when a user touches the touch screen with one finger, the processor 870 may control the touch screen and the second display 820 in the first mode.

When the first user input (the touch input applied using one finger) on the first display 810 is sensed, the processor 870 may control the second display 820 so that a mirroring image 1330 of an image displayed on the first display 810 is displayed on the second display 820.

The processor 870 may control the second display 820 so that the graphic object 1310 is displayed at a location corresponding to the first user input on the first display 810.

The user interface apparatus 200 configured as above allows contents on the touch screen or the HUD to be manipulated according to different user inputs, and therefore, a user is able to manipulate the user interface apparatus 200 conveniently.

That is, the user is able to easily manipulate contents, which is displayed on the HUD located hard to operate manually, in a similar way of manipulating the touch screen which is easy to operate.

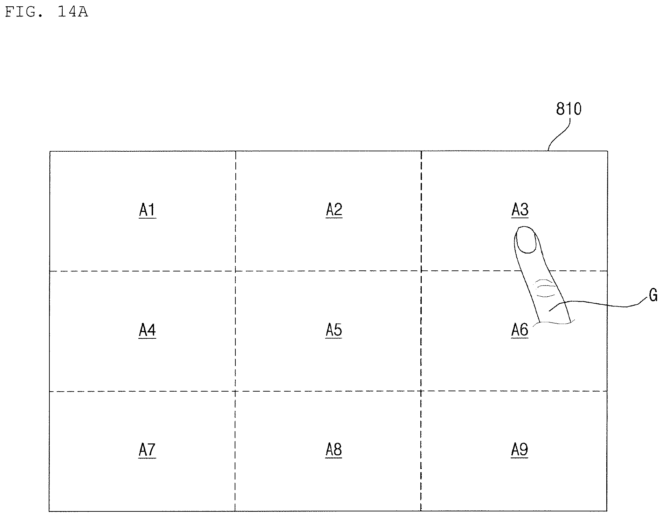

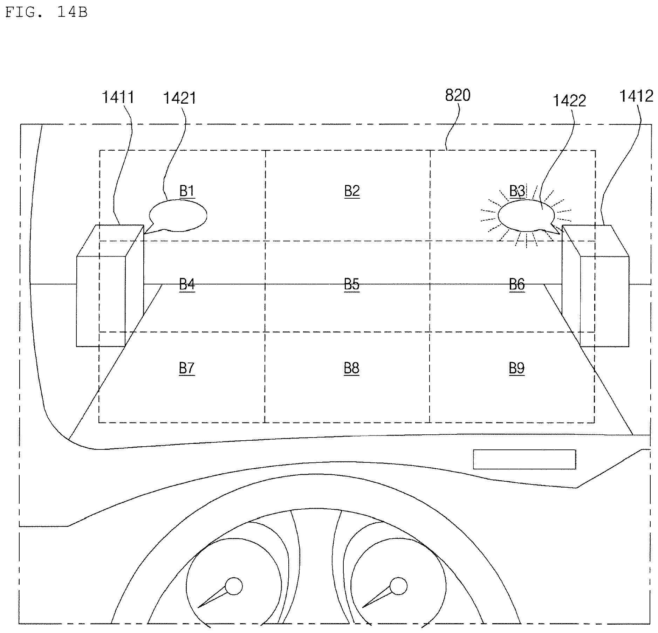

FIGS. 14A and 14B are diagrams illustrating example user interface apparatus.

The processor 870 may acquire a user input G on the first display 810 through the input unit 210.

Referring to FIGS. 14A and 14B, the first display 810 may be a touch screen integrally formed with the touch input unit 210. The second display 820 may be a HUD that projects an image onto a vehicle windshield.

The processor 870 may acquire a user's touch input converted into an electrical signal from the touch input unit 210 of the touch screen.

Referring to FIG. 14A, the first display 810 may be divided into a plurality of virtual regions.

For example, the first display 810 may be divided into 9 virtual regions from an upper left virtual region A1 to a bottom right virtual region A9. In addition, the first display 810 may be divided into less or more than 9 virtual regions.

For example, the first display 810 may be divided into a plurality of rectangular virtual regions. In addition, the first display 810 may be divided into a plurality of virtual regions each in the shape of a polygon or the like rather than a rectangle.

Referring to FIG. 14B, the second display 820 may be divided into virtual regions, of which the number corresponds to the number of virtual regions of the first display 810.

For example, in the case where the first display 810 is divided into 9 rectangular virtual regions, as shown in FIG. 14A, the second display 820 may be also divided into 9 rectangular virtual region.

For example, the second display 820 may include a first virtual region B1 corresponding to a first virtual region A1 of the first display 810. The second display 820 may include a second virtual region B2 corresponding to a second virtual region A2 of the first display 810. As such, the second display 820 may include a plurality of virtual regions B1 to B9 corresponding to a plurality of virtual regions A1 to A9 of the first display 810.

When a user input on a region of the first display 810 is sensed, the processor 870 may control the second display 820 to display a graphic object in a region of the second display 820 corresponding to the region of the first display 810.

FIG. 14B shows the case where the outside, such as exterior objects 1411 and 1412, is viewed through a vehicle windshield.

To display information about the first object 1411, the processor 870 may display a first objects 1421 located close to a first object 1411 with reference to a user's gaze. In this case, the processor 870 may display, in a virtual region B1 on a screen of the second display 820, a first graphic object associated with the first object 1421 located in a virtual region B4.

To display information about the second object 1412, the processor 870 may display a second graphic object 1422 located close to a second object 1412 with reference to a user's gaze. In this case, the processor 870 may display, in a virtual region B3 on a screen of the second display 820, the second graphic object 1422 associated with the second object 1412 located in a virtual region B6.

When a user input G on a virtual region A3 of the first display 810 is sensed, the processor 870 may highlight the second graphic object 1422 corresponding to the virtual region A2 of the first display 810 and located in the virtual region B3 of the second display 820. For example, the processor 870 may control the second display 820 so that the second graphic object 1422 is changed in brightness, color, or size.

In some examples, although not illustrated in the drawings, the second display 820 is not necessarily divided into virtual regions of which the number corresponds to correspond to the number of virtual regions of the first display 810. The number of virtual regions of the second display 820 may be equal to or smaller than the number of virtual regions of the first display 810. In this case, each virtual region of the first display 810 may be set to correspond to any one virtual region of the second display 820, so that a graphic object is displayed at a point on the second display 820 upon touching of one virtual region of the first display 810.

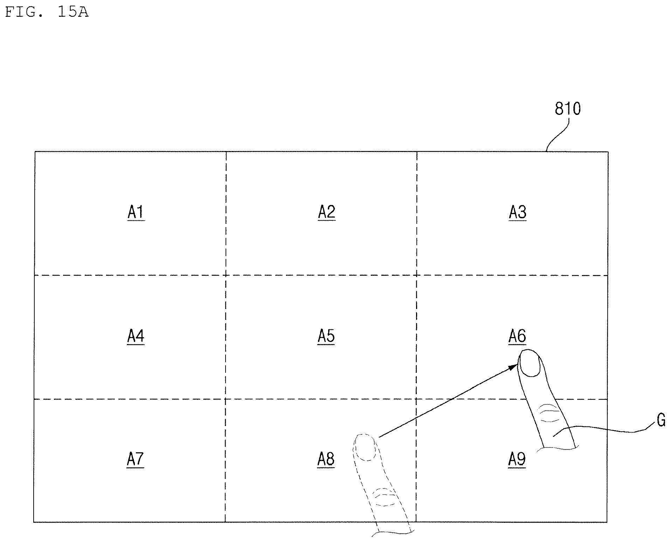

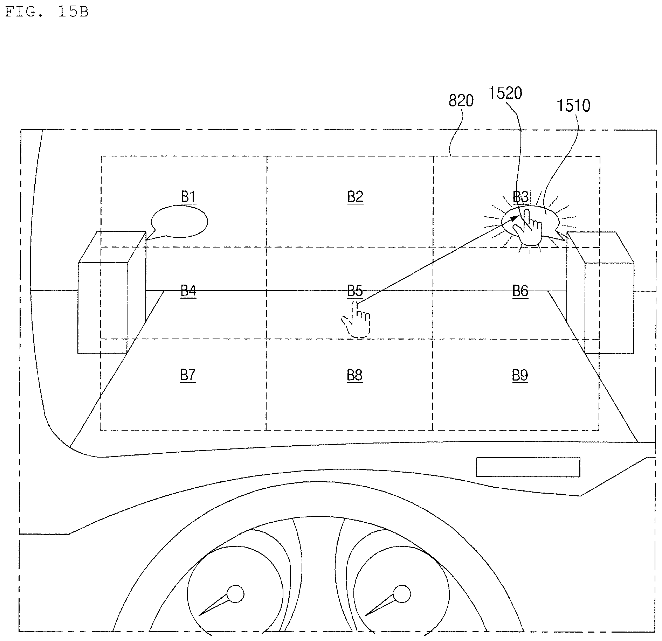

FIGS. 15A and 15B are diagrams illustrating example user interface apparatus according to the first implementation.

The processor 870 may acquire user input information on the first display 810 through the input unit 210.

FIG. 15A shows the first display 810, and a user's gesture G on the first display 810.

Referring to FIGS. 15A and 15B, the user interface apparatus 200 may include a touch screen in which the first display 810 and the touch input unit 210 are integrally formed. The user interface apparatus 200 may include the second display 820 that is implemented as a HUD which projects an image onto a vehicle windshield.

The processor 870 may acquire a user's touch input G converted into an electrical signal from the touch input unit 210 of the touch screen.

Referring to FIG. 15A, the first display 810 may be divided into a plurality of virtual regions.

For example, the first display 810 may be divided into 9 virtual regions from an upper left virtual region A1 to a bottom right virtual region A9.

Referring to FIG. 15B, the second display 820 may be divided into virtual regions, of which the number corresponds to the number of virtual regions of the first display 810.

For example, in the case where the first display 810 is divided into 9 rectangular virtual regions, as shown in FIG. 15A, the second display 820 may be divided into 9 rectangular virtual regions.

When a user input on the first display 810 is sensed as moving from a first point to a second point, the processor 870 may control the second display 820 so that a graphic object moving from one point to another point is displayed on the second display 820.

For example, the processor 870 may control the second display 820 so that a graphic object moves on the second display 820 by an actual moving distance of a gesture.

For example, the processor 870 may control the second display 820 so that a graphic object moves proportionally to a moving distance of a gesture. In this case, the moving distance of the graphic object on the second display 820 may not coincide with an actual moving distance of the gesture.

For example, the processor 870 may control the second display 820 so that 3D movement of a gesture is converted into 2D movement of a graphic object by a preset algorithm and the 2D movement of the graphic object is displayed on the second display 820.

The preset algorithm may be to project a 3D image of a gesture onto the first display 810 with reference to a sensor or a camera of the gesture input unit 212 so as to convert the 3D movement into 2D movement.

Referring to FIG. 15A, a user may applies, to the touch screen, a touch input G of moving from a virtual region A8 to a virtual region A6 of the first display 810.

Referring to FIG. 15B, when the user input G on the first display 810 is sensed, the processor 870 may control the second display 820 so that a graphic object 1520 is displayed at a preset location (e.g., a virtual region B5 which is the center of the second display 820).

In response to the user input G of moving from the virtual region A8 to the virtual region A6 of the first display 810, the processor 870 may display the graphic object 1520 that moves from a virtual region B5 to a virtual region B3 of the second display 820.

To correspond to a vector value of the user input on the first display 810, the processor 870 may perform a control action so that the graphic object 1520 moves on the second display 820.

For example, in the case where a transverse length ratio of the first display 810 to the second display 820 is 1:1.5, the processor 870 may perform a control action so that the graphic object 1520 on the second display 820 moves from left to right by 7.5cm when a user input G on the first display 810 moves from left to right by 5cm. Similarly, the processor 870 may control the graphic object 1520 to move in proportion to a longitudinal length ratio of the first display 810 to the second display 820.

That is, the processor 870 may control the second display 820 so that a moving distance vector (including a direction and a distance) of the graphic object 1520 in FIG. 15B and a moving distance vector of the gesture G in FIG. 15A are identical or proportional to each other.

The processor 870 may control the second display 820 so that a graphic object moves in the same moving direction of the gesture G by a distance proportional to a moving distance of the gesture G. In this case, the moving distance of the graphic object may not coincide with the actual moving distance of the gesture G.

The processor 870 may change at least one of brightness, color, or size of an image 1510 displayed in the virtual region B3 to which the graphic object 1520 is moved. For example, when the graphic object 1520 is moved to a location where the graphic object 152 overlaps the image 1510, the processor 870 may control the image 1510 to blink.

The user interface apparatus 200 configured as above may allow a user to easily manipulate contents of a HUD without viewing the first display.

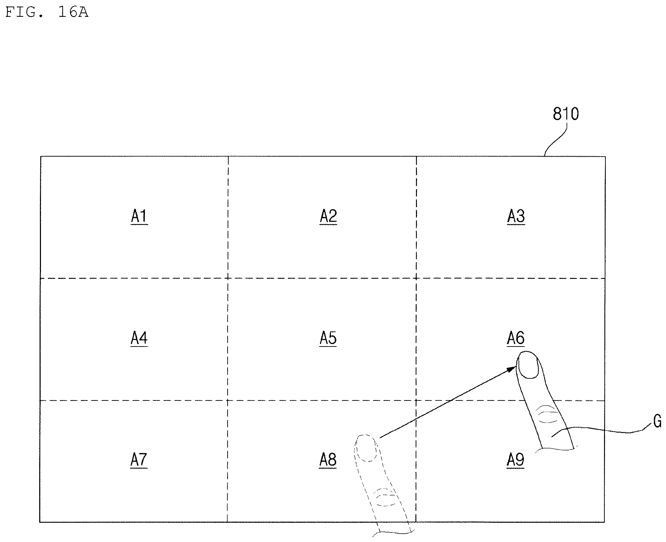

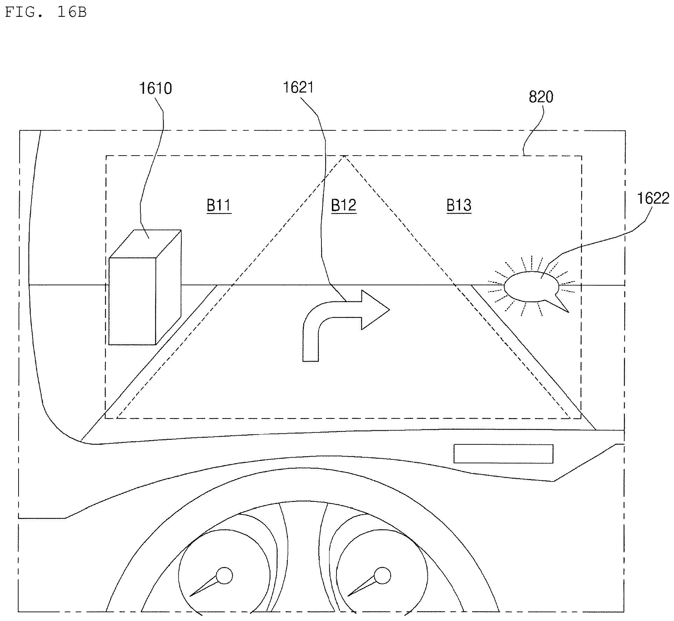

FIGS. 16A and 16B are diagrams illustrating example user interface apparatus according to the first implementation.

The processor 870 may acquire a user input G on the first display 810 through the input unit 210.

Referring to FIGS. 16A and 16B, the first display 810 may be integrally formed with the touch input unit 210 to implement a touch screen. The second display 820 may be implemented as a HUD that projects an image onto a vehicle windshield. The second display 820 may realize augmented reality (AR) by displaying an image corresponding to an exterior object which is viewed through the windshield.

The processor 870 may acquire a user input G converted into an electrical signal from the touch input 210 of the first display 810.

Referring to FIG. 16A, the first display 810 may be divided into a plurality of virtual regions.

For example, the first display 810 may be divided into 9 virtual regions from an upper virtual region A1 to a bottom right virtual region A9.

Referring to FIG. 16B, the second display 820 may be divided into a plurality of visual regions. The processor 870 may divide the second display 820 into a plurality of virtual regions based on a location of an exterior object 1610 in the outside the vehicle and/or locations of graphic objects 1621 and 1622 displayed on the second display 820.

For example, as illustrated in FIG. 16B, the processor 870 may divide the second display 820 into a virtual region B11 in which the exterior object 1610 is located, a virtual region B12 in which a first graphic object 1621 is located, and a virtual region B13 in which a second graphic object 1622 is located.

The processor 870 may set the virtual regions B11, B12, and B13 of the second display 820, which respectively correspond to a plurality of virtual regions A1 to A9 of the first display 810.

For example, the processor 870 may set the virtual regions A1, A4, and A7 of the first display 810 to correspond to the virtual region B11. The processor 870 may set the virtual regions A2, A5, and A8 of the first display 810 to correspond to the virtual region B12. The processor 870 may set the virtual regions A3, A6, and A9 of the first display 810 to correspond to the virtual region B13.

When a user input on the first display 810 is sensed as moving from a first point to a second point, the processor 870 may control the second display 820 so that a displayed location of a graphic object is changed from one point to another point on the second display 820.

In this case, changing the displayed location of the graphic object may be defined as including the concept of changing a displayed location of the same graphic object, or the concept of changing any one of graphic objects displayed at different locations.

Referring to FIG. 15A, a user may apply, to the touch screen, a touch input G of moving from the virtual region A8 to the virtual region A6 of the first display 810.

When a user input G on the virtual region A8 of the first display 810 is sensed, the processor 870 may control the second display 820 so that the first graphic object 1621 located in the virtual region B12 corresponding to the virtual region A8 is highlighted.

Referring to FIG. 15B, when a user input G moving from the virtual region A8 to the virtual region A6 of the first display 810 is sensed, the processor 870 may control the second display 820 so that the second graphic object 1622 located in the virtual region B13 corresponding to the virtual region A6 is highlighted.

In addition, referring to FIGS. 16A and 15B, the processor 870 may perform a control action so that a displayed location of a highlighted graphic object moves relatively to a user input in a way similar to the case where a graphic object moves relatively to a user input.

That is, when a user input G on the virtual region A8 is sensed, the processor 870 may highlight the first graphic object 1621 located in the virtual region B12 which is the center of the second display 820. Then, as the user input G moves from the virtual region A8 to the virtual region A6 on the touch screen, the processor 870 may highlight the second graphic object 1622 located in the virtual region B13 of the second display 820.

The processor 870 may highlight a graphic object, for example, by using a color, a size, a shape, a location, and blinking of a graphic object to bring a user's attention.

In addition, the processor 870 may control the second display 820 so that a selected object or a selected graphic object is changed in a first direction to correspond to a user input moving in the first direction. That is, a selected (or highlighted) graphic object may be changed relatively to correspond to a user input.

For example, when a user input of swiping from the virtual region A5 to the virtual region A6 is sensed while the first graphic object 1621 located in the virtual region B12 in FIG. 16B is selected, the processor 870 may control the second display 820 so that the second graphic object located on the right side of the second graphic object 1622 is selected. The processor 870 may highlight the selected second graphic object 1622.

When a direction of the second display 820 parallel to the ground surface is the X-axis direction and a direction of the second display 820 vertical to the ground surface is the Y-axis direction, the processor 870 may determine X-axis coordinates or Y-axis coordinates of the graphic objects 1621 and 1622.

When a user applies an X-axis directional or Y-axis directional swipe input, the processor 870 may change a selected graphic object according to the X-axis or y-axis coordinates of the graphic objects 1621 and 1622.

X-axis coordinates of a graphic object may be a value calculated with respect to each graphic object according to a predetermined rule. For example, the X-axis coordinates of the graphic object may be a value calculated with respect to the center of a graphic object. For example, the X-axis coordinates of the graphic object may be a value determined with respect to the bottom left of the graphic object. For example, the X-axis coordinates of the graphic object may be determined with respect to the left end or the right end of the graphic object.

Y-axis coordinates of a graphic object may be a value calculated with respect to each graphic object according to a predetermined rule. For example, the Y-axis coordinates of the graphic object may be a value calculated with respect to the center of the graphic object. For example, the Y-axis coordinates of the graphic object may be a value determined with respect to the left bottom of the graphic object. For example, the Y-axis coordinates of the graphic object may be determined with respect to the top end or the bottom end of the graphic object.

A swipe input may be defined as an input of moving a predetermined distance in one direction. For example, the swipe input may be laying on a user's finger on a touch screen, moving from left to the right, and then displacing the finger from the touch screen. For example, the swipe input may be a gesture of moving from left to the right, without contacting a display, and then moving a predetermined distance away from the display.

If a user applies a swipe input from left to right while the exterior object 1610 is selected in FIG. 16B, the first graphic object 1621 located on the right side of the exterior object 1610 in the X-axis direction may be selected. In this case, if the user applies one more swipe input from left to right, the second graphic object 1622 located on the right side of the first graphic object 1621 in the X-axis direction may be selected.

In this manner, if a user applies an upward-downward or left-right swipe input, the processor 870 may change a selected object or a selected graphic object.

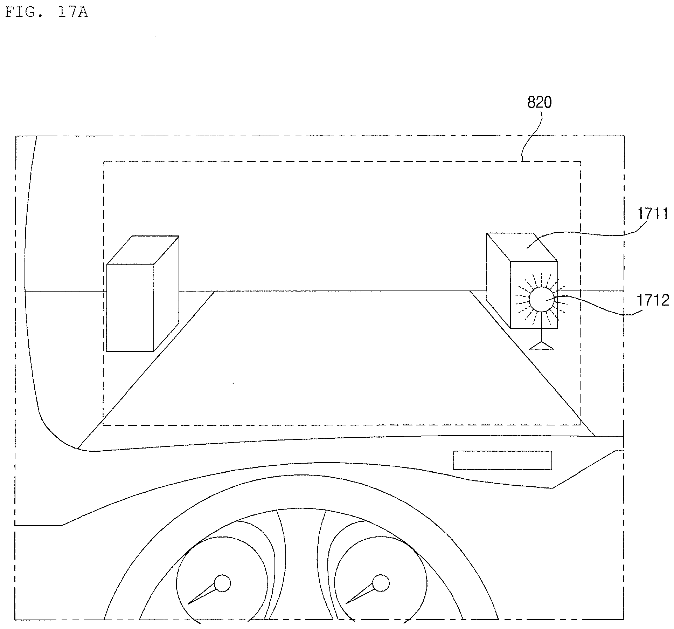

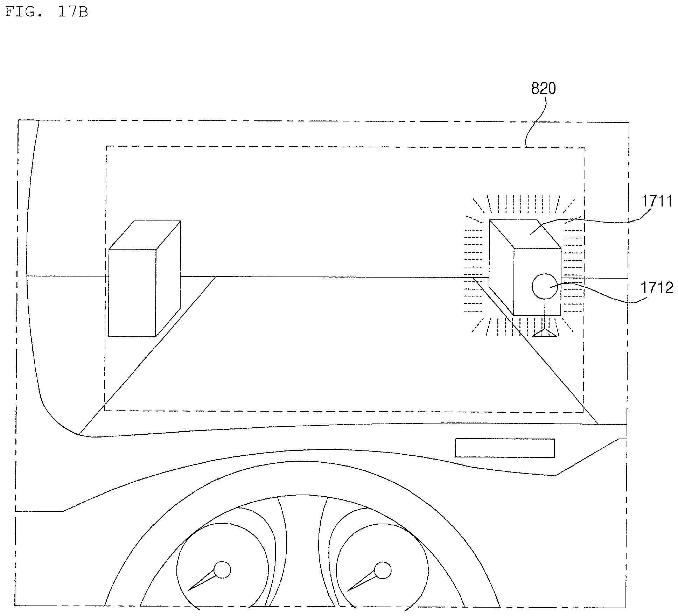

FIGS. 17A and 17B are diagrams illustrating example user interface apparatus according to the first implementation.

The processor 870 may acquire a user input G on the first display 810 through the input unit 210.

Referring to FIGS. 16A and 16B, the first display 810 may be integrally formed with the first input unit 210 to implement a touch screen. The second display 820 may be a HUD that projects an image onto a vehicle windshield. The second display 820 may realize augmented reality (AR) by displaying an image to correspond to an exterior object which is viewed through a windshield.

The processor 870 may acquire driver gaze information from the user gaze sensing unit 880 provided in the vehicle 100.

Alternatively, the processor 870 may acquire an image of the inside of the vehicle 100 from an internal camera, and generate user gaze information through image processing of the acquired image.

The processor 870 may control the second display 820 based on the driver gaze information to display an image to correspond to an exterior object viewed through a windshield, thereby realizing augmented reality (AR).

The processor 870 may acquire a user input G converted into an electrical signal from the touch input unit 210 of the first display 810.

The touch input unit 210 may be configured to generate a different electrical signal according to touch pressure.

The processor 870 may distinguish a third user input and a fourth user input based on a user input acquired through the input unit 210.

The third user input may be a user input that satisfies a third user input condition stored in the memory 840. The fourth user input may be a user input that satisfies a fourth user input condition stored in the memory 840.

For example, the third user input may be a touch input of pushing the touch screen with pressure smaller than a preset value. The fourth user input may be a touch input of pushing the touch screen with pressure equal to or greater than the preset value.

For example, the third user input may be a touch input of pushing the touch screen for a time equal to or smaller than a preset value. The fourth user input may be a touch input of pushing the touch screen for a time equal to or greater than the preset value.

When the third user input is sensed, the processor 870 may control the second display 820 so that a graphic object is displayed on the second display 820 to correspond to an object located close to the vehicle 100. When the fourth user input is sensed, the processor 870 may control the second display 820 so that a graphic object is displayed on the second display 820 to correspond to an object located far from the vehicle 100.

FIGS. 17A and 17B shows the case where first and second objects 1711 and 1712 are viewed overlapping each other on a user's gaze when the user views the outside through a vehicle windshield.

When a third user input of pushing the first display 810 with pressure smaller than a preset value, the processor 870 may display a graphic object corresponding to the second object 1712 located closest to the vehicle 100 in the first and second objects 1711 and 1712 which overlap each other.

Referring to FIG. 17A, for example, through the process described above with reference to FIGS. 14A to 16B, the processor 870 may control the second display 820 so that a graphic object highlighting the second object 1712 is displayed.

Referring to FIG. 17B, if a user touches the touch screen with a predetermined strength or more while the graphic object highlighting the second object 1712 is displayed, the processor 870 may control the second display 820 so that a graphic object highlighting the first object 1711 viewed overlapping the second object 1712 and located farther from the vehicle 100 is displayed.

The processor 870 may control the second display 820 so that a graphic object is displayed in a preset color as an image having a shape identical or corresponding to a shape of an object so as to highlight the object.

A graphic object which highlights an object may be an object-surrounding boundary shape, or an object-oriented figure shape. The processor 870 may control the second display 820 so that a graphic is displayed in the shape of an object-surrounding boundary shape or an object-oriented figure shape.

The user interface apparatus 200 configured as above may provide a user friendly control environment when it comes to manipulating contents displayed on a HUD.

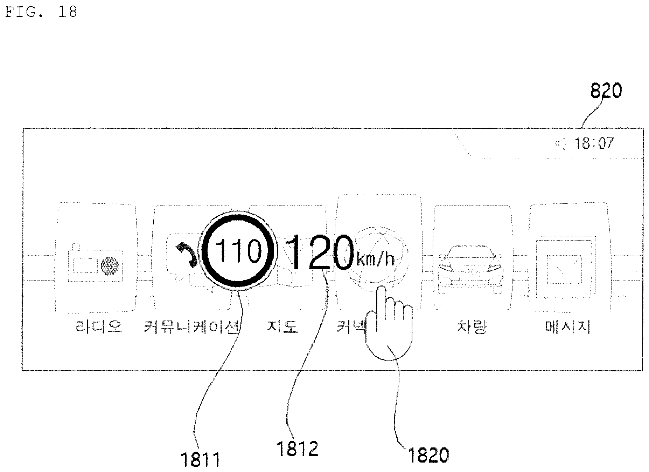

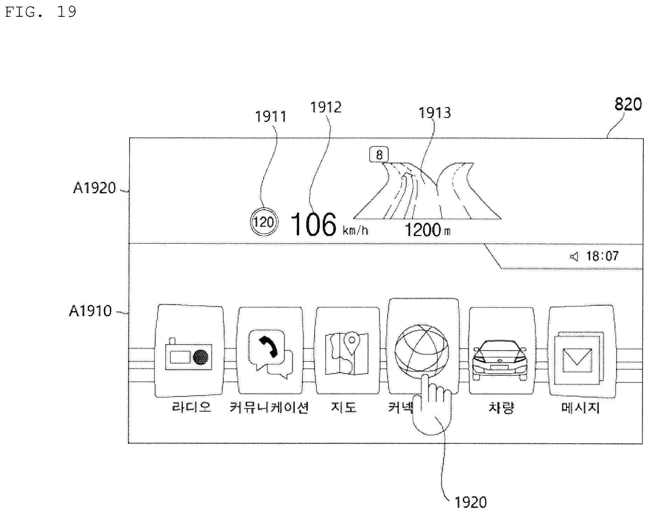

FIGS. 18 and 19 are diagrams illustrating example user interface apparatus according to the first implementation.

Referring to FIG. 18, the processor 870 may control the second display 820 so that an image associated with driving situation information is displayed on the second display 820.

The processor 870 may control the second display 820 so that an image displayed on the first display 810 and a graphic object 1820 moving in response to a gesture on the first display 810 are displayed on the second display 820.

Driving situation information may include at least one of information about an object located outside the vehicle 100, navigation information, or vehicle state information.

For example, the processor 870 may control the second display 820 so that images 1811 and 1812 associated with driving situation information are further displayed on the second display 820 to overlap an image displayed on the first display 810.

Referring to FIG. 18, in the case of performing a control action so that the images 1811 and 1812 associated with driving situation information are further displayed to overlap the image displayed on the first display 810, the processor 870 may control the second display 820 so that the image displayed on the first display 810 and the graphic object 1820 displayed on the first display 810 are reduced in brightness.

For example, in the case of further displaying the images 1811 and 1812 associated with driving situation information to overlap an image displayed on the first display 810, the processor 870 may control the second display 820 so that the image displayed on the first display 810 and the graphic object 1820 displayed on the first display 810 are reduced in shade.

Apart from the above examples, when further displaying the images 1811 and 1812 associated with driving situation information, which needs to be displayed preferred to an image displayed on the second display 820, to overlap an image displayed on the first display 810, the processor 870 may control the second display 820 so that a driver is allowed to effectively recognize the images 1811 and 1812 associated with driving situation information.

For example, the processor 870 may control the second display 820 so that the images 1811 and 1812 associated with driving situation information are displayed on the second display to overlap part of the image displayed on the first display 810.

In this case, the processor 870 may control the second display 820 so that a region which overlaps the images 1811 and 1812 associated with driving situation information among images displayed on the first display 810 is reduced in brightness and/or shade.

In some examples, although not illustrated in the drawings, in the case of displaying driving situation information, the processor 870 may control the second display 820 so that an image displayed on the first display 810 and the graphic object 1820 are temporarily not displayed.

The user interface apparatus 200 configured as above may efficiently display necessary driving situation information to a user during driving, thereby enhancing driving safety.

Referring to FIG. 19, the processor 870 may control the second display 820 so that an image displayed on the first display 810 and a graphic object 1920 moving in response to a gesture on the first display 810 are displayed on the second display 820.

The processor 870 may control the second display 820 so that images 1911, 1912, and 1913 associated with driving situation information are displayed on the second display 820.

The driving situation information may include at least one of information on an exterior object outside a vehicle, navigation information, or vehicle state information.

For example, the processor 870 may control the second display 820 so that an image displayed on the first display 810 is displayed in a region A1910 of an image displayed on the second display 820 and the images 1911, 1912, and 1913 associated with driving situation information are displayed on the other region A1920 of the image displayed on the second display 820.

For example, until a gesture G is sensed through the input unit 210, the processor 870 may control the second display 820 so that the images 1911, 1912, and 1913 associated with driving situation information are displayed in the entire region A1910 and A1920 of the second display 820. After a gesture G is sensed through the input unit 210, the processor 870 may control the second display 820 so that an image displayed on the first display 810 is displayed in one region A1910 of an image displayed on the second display 820 and the images 1911, 1912, and 1913 associated with the driving situation are displayed in the other region A1920 of the image displayed on the second display 820.

The user interface apparatus 200 configured as above may allow a user to recognize a gesture input through a graphic object displayed in an output unit, without the need to view an input unit, and therefore, the user is able to manipulate a vehicle safely during driving.

In addition, the user interface apparatus 200 may allow a user to manipulate a vehicle intuitively and conveniently.

### Second Implementation

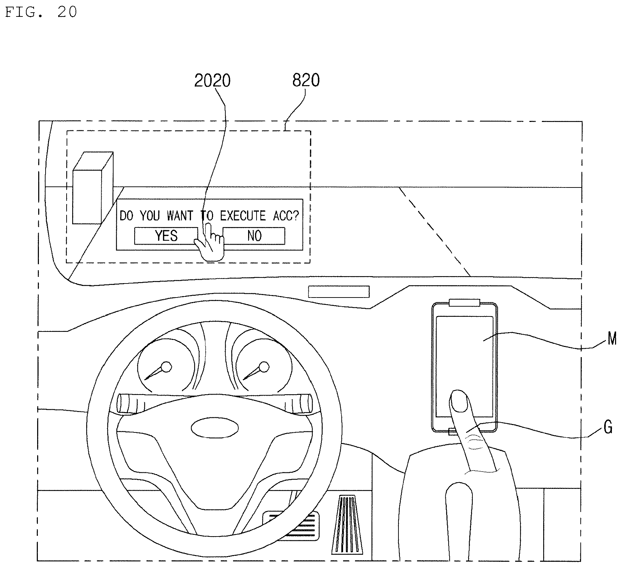

FIG. 20 is a diagram illustrating an example user interface apparatus according to a second implementation of the present disclosure.

A user interface apparatus 200' according to the second implementation may include an interface unit 830, a display 820, and a processor 870. In some examples, the processor 870 may include one or more processors.

The user interface apparatus 200' according to the second implementation may further include a user gaze sensing unit 880.

Configuration of the user interface apparatus 200' according to the second implementation of the present disclosure may be identical to the user interface apparatus 200 according to the first implementation.

The display 820 may be implemented as a HUD that projects an image onto a vehicle windshield. The display 820 may realize augmented reality (AR) by displaying an image to correspond to an exterior object which is viewed through a windshield.

The processor 870 may realize augmented reality (AR) by displaying an image to correspond to an exterior object, which is viewed through a windshield, based on driver gaze information acquired from the user gaze sensing unit 880.

Description about the second display 820 according to the first implementation may be applied to the display 820 according to the second implementation.

The interface unit 830 may be electrically connected to a mobile terminal M in a wired or wireless manner.

The mobile terminal M may be defined as a portable computing device such as a mobile phone and a tablet PC.

When the mobile terminal M is mounted at a specific location in a vehicle, the interface unit 830 may be automatically connected to the mobile terminal M.

For example, when the mobile terminal M is mounted in a holder provided in a vehicle, the interface unit 830 may be automatically connected to the mobile terminal M.

The interface unit 830 may acquire user input information from the mobile terminal M.

The user input information may be information that is generated by a user input on the mobile terminal M.

For example, the mobile terminal M may include a touch screen, and a touch sensing unit of the touch screen may convert a user input into an electrical signal and transmit the electrical signal to a processor of the mobile terminal M. The processor of the mobile terminal M may generate user input information based on the user input which has been converted into the electrical signal.

The interface unit 830 may function as a channel for supplying electrical energy to the mobile terminal M connected thereto.

Description about the interface unit 830 according to the first implementation may be applied to the interface unit 830 according to the second implementation.

The processor 870 may control overall operation of each unit of the user interface apparatus 200.

Description about the processor 870 according to the first implementation may be applied to the processor 870 according to the second implementation.

The processor 870 may acquire user input information from the mobile terminal M through the interface unit 830. The processor 870 may control the display 820 based on the user input information acquired from the mobile terminal M.

In the similar way in which the processor 870 according to the first implementation controls the first display 810 and/or the second display based on user input information acquired from the input unit 210, the processor 870 according to the second implementation may control the display 820 based on user input information acquired from the mobile terminal M.

Only a target to provide user input information is different in the second implementation, and thus, the processor 870 may control the display 820 based on the acquired user input information in the identical or similar way described in the first implementation.

In one example, if a user input is applied to the mobile terminal M while a screen of the mobile terminal M is turned off, the processor 870 may control the display 820 based on user input information acquired from the mobile terminal M.

In some examples, when the screen of the mobile terminal M is turned on, the processor of the mobile terminal M may control the mobile terminal M based on the user input information.

In another example, the processor 870 may control the display 820 so that a graphic object 2020 is displayed on the display 820 to correspond to a user input on the mobile terminal M.

For example, when a user input on a region of the display of the mobile terminal M is sensed, the processor 870 may perform a control action so that the graphic object 2020 is displayed in a region of the display 820, which corresponds to the region of the display of the mobile terminal M.

For example, when a user input of moving from a first point to a second point of a touch screen of the mobile terminal M is applied, the processor 870 may perform a control action so that a graphic object 2020 moving from one point to another point on the display 820 is displayed.

In some implementations, the method of how to remove the display 820 based on a user input on the first display 810, the method which is described with reference to FIGS. 9 to 19, may be equally applied to the case of controlling the display 820 based on a user input on the mobile terminal M.

Using the mobile terminal as an input unit to manipulate a HUD, the user interface apparatus 200' is able to control contents on the HUD based on user input information acquired from the mobile terminal, without an additional input unit in the vehicle.

The present invention as described above may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). In addition, the computer may include a processor or a controller. Thus, the above detailed description should not be construed as being limited to the implementations set forth herein in all terms, but should be considered by way of example.

## Claims

1. A user interface apparatus (200) for a vehicle, comprising:
a first display (810);
a second display (820) spaced apart from the first display (810);
an input unit (210) configured to receive user input through at least one of the first display (810) or the second display (820); and
one or more processors (870) configured to:
determine a control mode of the first display (810) and the second display (820), and
according to the determined control mode, control the second display (820) based on user input received from the input unit (210) through the first display (810), wherein the control mode comprises:
a first mode for controlling the first display (810) based on the user input received through the first display (810); and
a second mode for controlling the second display (820) based on the user input received through the first display (810),
**characterized in that**
the one or more processors (870) are further configured to:
sense a region of the first display (810) corresponding to the user input;
based on sensing the user input at a first region of the first display (810), perform a control action in the second mode; and
based on sensing the user input at a second region of the first display (810) outside of the first region, perform a control action in the first mode.

2. The user interface apparatus (200) according to claim 1, wherein the one or more processors (870) are further configured to control the second display (820) based on the user input received through the first display (810), in a state in which a screen of the first display (810) is turned off, or, wherein the user interface apparatus (200) further comprises a user gaze sensing unit (880), in response to the user gaze sensing unit (880) detecting a user's gaze at the second display (820).

3. The user interface apparatus (200) according to claim 1, wherein the one or more processors (870) are further configured to, in response to reception of user input for switching the control mode, switch the control mode from the first mode to the second mode or from the second mode to the first mode.

4. The user interface apparatus (200) according to claim 1, wherein the one or more processors (870) are further configured to determine the control mode based on at least one of driving information of the vehicle or image information displayed on the second display (820).

5. The user interface apparatus (200) according to claim 4, wherein the one or more processors (870) are further configured to determine that the control mode is the second mode, based on a speed of the vehicle being greater than or equal to a preset value, or based on a detection of user input at the first display (810) while the second display (820) displays information requiring user input.

6. The user interface apparatus (200) according to claim 1, wherein the one or more processors (870) are further configured to:
identify a first user input and a second user input based on the user input received from the input unit (210);
determine that the control mode is the first mode based on a detection of the first user input at the first display (810); and
determine that the control mode is the second mode based on a detection of the second user input at the first display (810).

7. The user interface apparatus (200) according to claim 1, wherein the one or more processors (870) are further configured to, based on a detection of the user input through the first display (810) in the first mode, control the second display (820) to display an image corresponding to at least a part of an image that is displayed on the first display (810).

8. The user interface apparatus (200) according to claim 7, wherein the one or more processors (870) are further configured to, while the vehicle is traveling, control the second display (820) to display the image corresponding to at least the part of the image that is displayed on the first display (810).

9. The user interface apparatus (200) according to claim 7, wherein the one or more processors (870) are further configured to control the second display (820) to display an image corresponding to a portion of the image that is displayed on the first display (810), the portion of the image being associated with the user input received through the first display (810).

10. The user interface apparatus (200) according to claim 1, wherein the one or more processors (870) are further configured to control the second display (820) to display a graphic object corresponding to the user input received through the first display (810).

11. The user interface apparatus (200) according to claim 10, wherein the one or more processors (870) are further configured to:
detect a movement input at the first display (810) corresponding to a gesture of a user from a first point of the first display (810) to a second point of the first display (810); and
based on detection of the movement input at the first display (810), control the second display (820) to display a graphic object that is moving from a first point of the second display (820) to a second point of the second display (820), or
based on detection of the movement input at the first display (810), control the second display (820) to change a displayed location of a graphic object from a first point of the second display (820) to a second point of the second display (820) .

12. The user interface apparatus (200) according to claim 10, wherein the one or more processors (870) are further configured to:
identify a third user input and a fourth user input based on the user input received from the input unit (210), the third user input being different from the fourth user input;
based on detection of the third user input at the first display (810), control the second display (820) to display a graphic object corresponding to an object located within a predetermined distance from the vehicle; and
based on detection the fourth user input at the first display (810), control the second display (820) to display a graphic object corresponding to an object located outside of the predetermined distance from the vehicle.

13. The user interface apparatus (200) according to claim 1, wherein the user interface apparatus (200) further comprises:
an interface unit (830); and
wherein the one or more processors (870) configured to:
receive user input information from a mobile terminal through the interface unit (830), and
control the second display (820) based on the user input information received from the mobile terminal.

## Patentansprüche

1. Benutzerschnittstellenvorrichtung (200) für ein Fahrzeug, die aufweist:
eine erste Anzeige (810);
eine zweite Anzeige (820), die von der ersten Anzeige (810) beabstandet ist;
eine Eingabeeinheit (210), die konfiguriert ist, um durch die erste Anzeige (810) und/oder die zweite Anzeige (820) eine Benutzereingabe zu empfangen; und
einen oder mehrere Prozessoren (870), die konfiguriert sind, um:
eine Steuerbetriebsart der ersten Anzeige (810) und der zweiten Anzeige (820) zu bestimmen, und
die zweite Anzeige (820) gemäß der bestimmten Steuerbetriebsart basierend auf der Benutzereingabe, die von der ersten Eingabeeinheit (210) durch die erste Anzeige (810) empfangen wird, zu steuern, wobei die Steuerbetriebsart aufweist:
eine erste Betriebsart zum Steuern der ersten Anzeige (810) basierend auf der Benutzereingabe, die durch die erste Anzeige (810) empfangen wird; und
eine zweite Betriebsart zum Steuern der zweiten Anzeige (820) basierend auf der Benutzereingabe, die durch die erste Anzeige (810) empfangen wird,
**dadurch gekennzeichnet, dass**
der eine oder die mehreren Prozessoren (870) ferner konfiguriert sind, um:
einen Bereich der ersten Anzeige (810), welcher der Benutzereingabe entspricht, abzutasten;
basierend auf der Abtastung der Benutzereingabe an einem ersten Bereich der ersten Anzeige (810) eine Steueraktion in der zweiten Betriebsart durchzuführen; und
basierend auf der Abtastung der Benutzereingabe an einem zweiten Bereich der ersten Anzeige (810) außerhalb des ersten Bereichs eine Steueraktion in der ersten Betriebsart durchzuführen.

2. Benutzerschnittstellenvorrichtung (200) nach Anspruch 1, wobei der eine oder die mehreren Prozessoren (870) ferner konfiguriert sind, in einem Zustand, in dem ein Bildschirm der ersten Anzeige (810) ausgeschaltet ist, die zweite Anzeige (820) basierend auf der Benutzereingabe, die durch die erste Anzeige (810) empfangen wird, zu steuern, oder wenn die Benutzerschnittstellenvorrichtung (200) ferner eine Benutzerblickrichtung-Abtasteinheit (880) aufweist, ansprechend darauf, dass die Benutzerblickrichtung-Abtasteinheit (880) einen Benutzerblick auf die zweite Anzeige (820) erfasst,.

3. Benutzerschnittstellenvorrichtung (200) nach Anspruch 1, wobei der eine oder die mehreren Prozessoren (870) ferner konfiguriert sind, ansprechend auf den Empfang der Benutzereingabe zum Umschalten der Steuerbetriebsart die Steuerbetriebsart von der ersten Betriebsart auf die zweite Betriebsart oder von der zweiten Betriebsart auf die erste Betriebsart umzuschalten.

4. Benutzerschnittstellenvorrichtung (200) nach Anspruch 1, wobei der eine oder die mehreren Prozessoren (870) ferner konfiguriert sind, die Steuerbetriebsart basierend auf Fahrinformationen des Fahrzeugs oder Bildinformationen, die auf der zweiten Anzeige (820) angezeigt werden, zu bestimmen.

5. Benutzerschnittstellenvorrichtung (200) nach Anspruch 4, wobei der eine oder die mehreren Prozessoren (870) ferner konfiguriert sind, basierend darauf, dass eine Geschwindigkeit des Fahrzeugs größer oder gleich einem voreingestellten Wert ist, oder basierend auf einer Erfassung der Benutzereingabe an der ersten Anzeige (810), während die zweite Anzeige (820) Informationen anzeigt, welche die Benutzereingabe anfordern, zu bestimmen, dass die Steuerbetriebsart die zweite Betriebsart ist.

6. Benutzerschnittstellenvorrichtung (200) nach Anspruch 1, wobei der eine oder die mehreren Prozessoren (870) ferner konfiguriert sind, um:
eine erste Benutzereingabe und eine zweite Benutzereingabe basierend auf der Benutzereingabe, die von der Eingabeeinheit (210) empfangen wird, zu identifizieren;
basierend auf einer Erfassung der ersten Benutzereingabe an der ersten Anzeige (810) zu bestimmen, dass die Steuerbetriebsart die erste Betriebsart ist; und
basierend auf einer Erfassung der zweiten Benutzereingabe an der ersten Anzeige (810) zu bestimmen, dass die Steuerbetriebsart die zweite Betriebsart ist.

7. Benutzerschnittstellenvorrichtung (200) nach Anspruch 1, wobei der eine oder die mehreren Prozessoren (870) ferner konfiguriert sind, basierend auf einer Erfassung der Benutzereingabe durch die erste Anzeige (810) in der ersten Betriebsart die zweite Anzeige (820) zu steuern, um ein Bild, das wenigstens einem Teil eines auf der ersten Anzeige (810) angezeigten Bilds entspricht, anzuzeigen.

8. Benutzerschnittstellenvorrichtung (200) nach Anspruch 7, wobei der eine oder die mehreren Prozessoren (870) ferner konfiguriert sind, die zweite Anzeige (820) während das Fahrzeug fährt, zu steuern, um das Bild, das wenigstens dem Teil des auf der ersten Anzeige (810) angezeigten Bilds entspricht, anzuzeigen.

9. Benutzerschnittstellenvorrichtung (200) nach Anspruch 7, wobei der eine oder die mehreren Prozessoren (870) ferner konfiguriert sind, die zweite Anzeige (820) zu steuern, um ein Bild, das einem Abschnitt des auf der ersten Anzeige (810) angezeigten Bilds entspricht, anzuzeigen, wobei der Abschnitt des Bilds, welcher der Benutzereingabe zugeordnet wird, durch die erste Anzeige (810) empfangen wird.

10. Benutzerschnittstellenvorrichtung (200) nach Anspruch 1, wobei der eine oder die mehreren Prozessoren (870) ferner konfiguriert sind, die zweite Anzeige (820) zu steuern, um ein Graphikobjekt, das der durch die erste Anzeige (810) empfangenen Benutzereingabe entspricht, anzuzeigen.

11. Benutzerschnittstellenvorrichtung (200) nach Anspruch 10, wobei der eine oder die mehreren Prozessoren (870) ferner konfiguriert sind, um:
eine Bewegungseingabe an der ersten Anzeige (810), die einer Handbewegung eines Benutzers von einem ersten Punkt der ersten Anzeige (810) zu einem zweiten Punkt der ersten Anzeige (810) entspricht, zu erfassen; und
die zweite Anzeige (820) basierend auf der Erfassung der an der ersten Anzeige (810) eingegebenen Bewegung zu steuern, um ein Graphikobj ekt, das sich von einem ersten Punkt der zweiten Anzeige (820) zu einem zweiten Punkt der zweiten Anzeige (820) bewegt, anzuzeigen, oder
die zweite Anzeige (820) basierend auf der Erfassung der an der ersten Anzeige (810) eingegebenen Bewegung zu steuern, um einen angezeigten Ort eines Graphikobjekts von einem ersten Punkt der zweiten Anzeige (820) zu einem zweiten Punkt der zweiten Anzeige (820) zu ändern.

12. Benutzerschnittstellenvorrichtung (200) nach Anspruch 10, wobei der eine oder die mehreren Prozessoren (870) ferner konfiguriert sind, um:
eine dritte Benutzereingabe und eine vierte Benutzereingabe basierend auf der von der Eingabeeinheit (210) empfangenen Benutzereingabe zu identifizieren, wobei die dritte Benutzereingabe verschieden zu der vierten Benutzereingabe ist;
die zweite Anzeige (820) basierend auf der Erfassung der dritten Benutzereingabe an der ersten Anzeige (810) zu steuern, um ein Graphikobjekt, das einem Objekt entspricht, dass innerhalb eines vorbestimmten Abstands von dem Fahrzeug angeordnet ist, anzuzeigen; und
die zweite Anzeige (820) basierend auf der Erfassung der vierten Benutzereingabe an der ersten Anzeige (810) zu steuern, um ein Graphikobjekt, das einem Objekt entspricht, das außerhalb des vorbestimmten Abstands von dem Fahrzeug angeordnet ist, anzuzeigen.

13. Benutzerschnittstellenvorrichtung (200) nach Anspruch 1, wobei die Benutzerschnittstellenvorrichtung (200) ferner aufweist:
eine Schnittstelleneinheit (830); und
wobei der eine oder die mehreren Prozessoren (870) konfiguriert sind, um:
durch die Schnittstelleneinheit (830) Benutzereingabeinformationen von einem mobilen Endgerät zu empfangen, und
die zweite Anzeige (820) basierend auf den von dem mobilen Endgerät empfangenen Benutzereingabeinformationen zu steuern.

## Revendications

1. Appareil d'interface utilisateur (200) pour un véhicule, comprenant :
un premier affichage (810) ;
un second affichage (820) espacé du premier affichage (810) ;
une unité d'entrée (210) configurée pour recevoir une entrée utilisateur à travers au moins un parmi le premier affichage (810) ou le second affichage (820) ; et
un ou plusieurs processeurs (870) configurés pour :
déterminer un mode de commande du premier affichage (810) et du second affichage (820), et
selon le mode de commande déterminé, commander le second affichage (820) sur la base de l'entrée utilisateur reçue depuis l'unité d'entrée (210) à travers le premier affichage (810), dans lequel le mode de commande comprend :
un premier mode pour la commande du premier affichage (810) sur la base de l'entrée utilisateur reçue à travers le premier affichage (810) ; et
un second mode pour la commande du second affichage (820) sur la base de l'entrée utilisateur reçue à travers le premier affichage (810),
**caractérisé en ce que**
les un ou plusieurs processeurs (870) sont en outre configurés pour :
détecter une région du premier affichage (810) correspondant à l'entrée utilisateur ;
sur la base de la détection de l'entrée utilisateur au niveau d'une première région du premier affichage (810), réaliser une action de commande dans le second mode ; et
sur la base de la détection de l'entrée utilisateur au niveau d'une seconde région du premier affichage (810) à l'extérieur de la première région, réaliser une action de commande dans le premier mode.

2. Appareil d'interface utilisateur (200) selon la revendication 1, dans lequel les un ou plusieurs processeurs (870) sont en outre configurés pour commander le second affichage (820) sur la base de l'entrée utilisateur reçue à travers le premier affichage (810), dans un état dans lequel un écran du premier affichage (810) est éteint, ou, dans lequel l'appareil d'interface utilisateur (200) comprend en outre une unité de détection de regard d'utilisateur (880), en réponse à la détection par l'unité de détection de regard d'utilisateur (880) d'un regard d'utilisateur au niveau du second affichage (820).

3. Appareil d'interface utilisateur (200) selon la revendication 1, dans lequel les un ou plusieurs processeurs (870) sont en outre configurés pour, en réponse à la réception de l'entrée utilisateur pour la commutation du mode de commande, commuter le mode de commande du premier mode au second mode ou du second mode au premier mode.

4. Appareil d'interface utilisateur (200) selon la revendication 1, dans lequel les un ou plusieurs processeurs (870) sont en outre configurés pour déterminer le mode de commande sur la base d'au moins une parmi l'information de conduite du véhicule ou l'information d'image affichée sur le second affichage (820).

5. Appareil d'interface utilisateur (200) selon la revendication 4, dans lequel les un ou plusieurs processeurs (870) sont en outre configurés pour déterminer que le mode de commande est le second mode, sur la base d'une vitesse du véhicule qui est supérieure ou égale à une valeur prédéfinie, ou sur la base d'une détection d'une entrée utilisateur au niveau du premier affichage (810) alors que le second affichage (820) affiche l'information requérant l'entrée utilisateur.

6. Appareil d'interface utilisateur (200) selon la revendication 1, dans lequel les un ou plusieurs processeurs (870) sont en outre configurés pour :
identifier une première entrée utilisateur et une deuxième entrée utilisateur sur la base de l'entrée utilisateur reçue depuis l'unité d'entrée (210) ;
déterminer que le mode de commande est le premier mode sur la base d'une détection de la première entrée utilisateur au niveau du premier affichage (810) ; et
déterminer que le mode de commande est le second mode sur la base d'une détection de la deuxième entrée utilisateur au niveau du premier affichage (810).

7. Appareil d'interface utilisateur (200) selon la revendication 1, dans lequel les un ou plusieurs processeurs (870) sont en outre configurés pour, sur la base d'une détection de l'entrée utilisateur à travers le premier affichage (810) dans le premier mode, commander le second affichage (820) pour afficher une image correspondant à au moins une partie d'une image qui est affichée sur le premier affichage (810).

8. Appareil d'interface utilisateur (200) selon la revendication 7, dans lequel les un ou plusieurs processeurs (870) sont en outre configurés pour, alors que le véhicule se déplace, commander le second affichage (820) pour afficher l'image correspondant à au moins la partie de l'image qui est affichée sur le premier affichage (810).

9. Appareil d'interface utilisateur (200) selon la revendication 7, dans lequel les un ou plusieurs processeurs (870) sont en outre configurés pour commander le second affichage (820) pour afficher une image correspondant à une portion de l'image qui est affichée sur le premier affichage (810), la portion de l'image étant associée à l'entrée utilisateur reçue à travers le premier affichage (810).

10. Appareil d'interface utilisateur (200) selon la revendication 1, dans lequel les un ou plusieurs processeurs (870) sont en outre configurés pour commander le second affichage (820) pour afficher un objet graphique correspondant à l'entrée utilisateur reçue à travers le premier affichage (810).

11. Appareil d'interface utilisateur (200) selon la revendication 10, dans lequel les un ou plusieurs processeurs (870) sont en outre configurés pour :
détecter une entrée de mouvement au niveau du premier affichage (810) correspondant à un geste d'un utilisateur depuis un premier point du premier affichage (810) à un second point du premier affichage (810) ; et
sur la base de la détection de l'entrée de mouvement au niveau du premier affichage (810), commander le second affichage (820) pour afficher un objet graphique qui se déplace depuis un premier point du second affichage (820) à un second point du second affichage (820), ou
sur la base de la détection de l'entrée de mouvement au niveau du premier affichage (810), commander le second affichage (820) pour changer un emplacement affiché d'un objet graphique depuis un premier point du second affichage (820) à un second point du second affichage (820).

12. Appareil d'interface utilisateur (200) selon la revendication 10, dans lequel les un ou plusieurs processeurs (870) sont en outre configurés pour :
identifier une troisième entrée utilisateur et une quatrième entrée utilisateur sur la base de l'entrée utilisateur reçue depuis l'unité d'entrée (210), la troisième entrée utilisateur étant différente de la quatrième entrée utilisateur ;
sur la base de la détection de la troisième entrée utilisateur au niveau du premier affichage (810), commander le second affichage (820) pour afficher un objet graphique correspondant à un objet situé dans une distance prédéterminée du véhicule ; et
sur la base de la détection de la quatrième entrée utilisateur au niveau du premier affichage (810), commander le second affichage (820) pour afficher un objet graphique correspondant à un objet situé en dehors de la distance prédéterminée du véhicule.

13. Appareil d'interface utilisateur (200) selon la revendication 1, dans lequel l'appareil d'interface utilisateur (200) comprend en outre :
une unité d'interface (830) ; et
dans lequel les un ou plusieurs processeurs (870) sont configurés pour :
recevoir une information d'entrée utilisateur depuis un terminal mobile à travers l'unité d'interface (830), et
commander le second affichage (820) sur la base de l'information d'entrée utilisateur reçue depuis le terminal mobile.
